# EUROPEAN PATENT APPLICATION

(11) **EP 4 823 066 A1**
(43) Date of publication of application: **14.10.2026**
(21) Application number: 25747420.5
(22) Date of filing: 03.01.2025
(51) Int. Cl.: H04L 65/1069

(54) **NETWORK CALL METHOD, SYSTEM AND APPARATUS, DEVICE, STORAGE MEDIUM, AND PROGRAM PRODUCT**

(30) Priority: 29.01.2024 CN 202410124322
(71) Applicant: Tencent Technology (Shenzhen) Company Limited, Shenzhen, Guangdong 518057 (CN)
(72) Inventor: WANG, Shaoming, Shenzhen, Guangdong 518057 (CN); HOU, Jinkun, Shenzhen, Guangdong 518057 (CN); GUO, Runzeng, Shenzhen, Guangdong 518057 (CN)
(74) Representative: EP&C
(86) International application number: PCT/CN2025/070452
(87) International publication number: WO 2025/161844

(57) **Abstract**

A network call method, system and apparatus, a device, a storage medium, and a program product, relating to the technical field of computers. The method comprises: a first terminal sends a first call request to a payment terminal, wherein the payment terminal is used for sending a second call request to a second terminal in response to the first call request passing verification, and sending a second call response to the first terminal on the basis of a first call response sent by the second terminal, the first terminal is a terminal of a first object that has successfully paid on the payment terminal, and the second terminal is a terminal of a second object for providing a payment-associated service (1001); and in response to the second call response, the first terminal performs a network call with the second terminal network by means of the payment terminal (1002). By using the method, system, apparatus, device, storage medium and program product, communication is highly convenient, thereby improving communication efficiency, and improving the frequency of offline payment using the payment terminal.

## Description

### RELATED APPLICATION

This application claims priority to Chinese Patent Application No. 202410124322.0, entitled "NETWORK CALL METHOD, SYSTEM, AND APPARATUS" filed with the China National Intellectual Property Administration on January 29, 2024.

### FIELD OF THE TECHNOLOGY

Embodiments of this application relate to the field of computer technologies, and in particular, to a method for network calling, system, and apparatus, a device, a storage medium, and a program product.

### BACKGROUND OF THE DISCLOSURE

With development of computer technologies, payment terminals are used to perform offline payment in an increasing quantity of scenarios. For example, a payment terminal is used to perform offline payment for a commodity selected from a physical store, or a payment terminal is used to perform offline payment for a public transportation tool that is taken. During offline payment by using a payment terminal, the payment terminal may implement payment by recognizing a face, a fingerprint, a palm print, or the like of a user based on a computer vision technology.

After performing offline payment by using the payment terminal, the user may need to communicate with an object for providing a payment-associated service, for example, consult the object for providing the payment-associated service about a payment-associated problem. Therefore, it is necessary to provide a method for network calling that can improve communication efficiency.

### SUMMARY

Embodiments of this application provide a method for network calling, system, and apparatus, a device, a storage medium, and a program product, to improve communication efficiency, utilization of a payment terminal, and security of a social account. The technical solutions are as follows:

According to one aspect, embodiments of this application provide a method for network calling. The method is performed by a first terminal, and the method includes: transmitting a first call request to a payment terminal, the first call request being configured to indicate the payment terminal to transmit a second call request to a second terminal in response to the first call request passing verification, the first terminal having a payment on the payment terminal; receiving a second call response from the payment terminal, wherein the second call response is transmitted by the payment terminal based on a first call response, and the first call response is transmitted by the second terminal in response to the second call request; and making a first network call with the second terminal through the payment terminal in response to the second call response.

Embodiments of this application further provide a method for network calling. The method is performed by a second terminal, and the method includes: receiving a second call request transmitted by a payment terminal, and transmitting a first call response to the payment terminal in response to the second call request, the first call response being configured to indicate the payment terminal to transmit a second call response to a first terminal, and the second call response being configured to indicate the first terminal to make a first network call with the second terminal through the payment terminal; and making the first network call with the first terminal through the payment terminal .

Embodiments of this application further provide a method for network calling. The method is performed by a payment terminal, and the method includes: receiving a first call request transmitted by a first terminal; transmitting a second call request to a second terminal in response to the first call request passing verification; and transmitting a second call response to the first terminal in response to receiving, from the second terminal, a first call response to the second call request, the second call response being configured to indicate the first terminal to make a first network call with the second terminal through the payment terminal.

According to another aspect, embodiments of this application provide a system for network calling. The system includes a first terminal, a payment terminal, and a second terminal. The first terminal is configured to transmit a first call request to the payment terminal. The payment terminal is configured to transmit a second call request to the second terminal determining that the second terminal passes verification. The second terminal is configured to receive the second call request transmitted by the payment terminal, and transmit a first call response to the payment terminal in response to the second call request. The payment terminal is further configured to transmit a second call response to the first terminal in response to the first call response. The first terminal is further configured to make a first network call with the second terminal through the payment terminal in response to the second call response. The first terminal has a payment on the payment terminal. The second terminal is a terminal for providing a payment-associated service.

According to another aspect, embodiments of this application further provide a method for network calling. The method includes: A first terminal transmits a first call request to a payment terminal. The payment terminal transmits a second call request to a second terminal in response to the first call request passing verification. The second terminal receives a second call request transmitted by the payment terminal, and transmits a first call response to the payment terminal in response to the second call request. The payment terminal transmits a second call response to the first terminal in response to the first call response transmitted by the second terminal. The first terminal makes a first network call with the second terminal through the payment terminal in response to the second call response. The first terminal is a terminal of a first object that has successfully paid on the payment terminal. The second terminal is a terminal of a second object for providing a payment-associated service.

In some embodiments, the first terminal transmits a first call request to a payment terminal includes: The first terminal displays a prompt message, the prompt message being configured for indicating that the payment on the payment terminal is completed; displays a payment details page in response to a first trigger operation on the prompt message, the payment details page comprising a network call service control; and transmits the first call request to the payment terminal in response to a second trigger operation on the network call service control.

In some embodiments, the method further includes: The first terminal displays a call initiation interface, the call initiation interface comprising a virtual social account of the payment terminal, the virtual social account being configured for identifying the payment terminal.

In some embodiments, the method further includes: the first terminal obtains first authorization information, the first authorization information being configured for authorizing the first terminal to make a second network call with the payment terminal.

In some embodiments, the making a first network call with the second terminal through the payment terminal includes at least one of the following: The first terminal transmits first call data to the second terminal through the payment terminal; and the first terminal receives, through the payment terminal, second call data transmitted by the second terminal.

In some embodiments, the transmitting a first call response to the payment terminal in response to the second call request includes: the second terminal displays a call request interface in response to the second call request, the call request interface comprising a virtual social account of the payment terminal and a call acceptance control, the virtual social account being configured for identifying the payment terminal; and transmits the first call response to the payment terminal in response to a trigger operation on the call acceptance control.

In some embodiments, that the second terminal makes a first network call with the first terminal through the payment terminal includes at least one of the following: the second terminal receives, through the payment terminal, first call data transmitted by the second terminal; and the second terminal transmits second call data to the second terminal through the payment terminal.

In some embodiments, the method further includes: the second terminal obtains second authorization information, the second authorization information being configured for authorizing the second terminal to make a third network call with the payment terminal.

In some embodiments, the first call request carries a first account, and the method further includes: In response to historical payment information comprising first payment information associated with the first account and the first payment information satisfying a preset constraint condition, determining that the first call request passes verification, the preset constraint condition being that at least one of the following is satisfied: an interval between a payment time of the first payment information and a current time is not greater than a preset interval; and an order amount in the first payment information is greater than a preset amount.

In some embodiments, the method further includes: The payment terminal displays a settings page, the settings page comprising a setting control for determining the second terminal; determines the second terminal in response to a fourth trigger operation on the setting control; and verifies the second terminal.

In some embodiments, the verifying the second terminal includes: The payment terminal transmits the public key of the payment terminal being configured to indicate the second terminal to encrypt first data based on the public key to obtain second data. The second terminal receives the public key of the payment terminal, encrypts first data based on the public key of the payment terminal to obtain second data, and transmits the second data to the payment terminal. The payment terminal decrypts the second data by using a private key of the payment terminal to obtain third data, and transmits the third data to the second terminal. The second terminal transmits a verification pass response to the payment terminal in response to that the third data is identical to the first data. In response to the verification pass response, the payment terminal determines that the second terminal passes verification.

In some embodiments, the verifying the second terminal includes: The payment terminal transmits fourth data and a public key of the payment terminal to the second terminal. The second terminal receives the fourth data and the public key of the payment terminal, encrypts the fourth data by using the public key of the payment terminal to obtain fifth data, and transmits the fifth data to the payment terminal. The payment terminal decrypts the fifth data by using a private key of the payment terminal to obtain sixth data; and in response to that the sixth data is identical to the fourth data, determines that the second terminal passes verification.

In some embodiments, the determining the second terminal in response to a fourth trigger operation on the setting control includes: The payment terminal captures an account image in response to the fourth trigger operation on the setting control, recognizes the second terminal via near field communication, NFC, in response to the fourth trigger operation on the setting control.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

According to another aspect, embodiments of this application provide an apparatus for network calling. The apparatus includes:
a transmitting module, configured to: transmit a first call request to a payment terminal, the payment terminal being configured to transmit a second call request to a second terminal in response to the first call request passing verification, and transmit a second call response to a first terminal based on a first call response transmitted by the second terminal, the first terminal being a terminal of a first object that has successfully paid on the payment terminal, and the second terminal being a terminal of a second object for providing a payment-associated service; and
a call module, configured to make a first network call with the second terminal through the payment terminal in response to the second call response.

Embodiments of this application further provide an apparatus for network calling. The apparatus includes:
a receiving module, configured to receive a second call request transmitted by a payment terminal;
a transmitting module, configured to transmit a first call response to the payment terminal according to the second call request, the payment terminal being configured to transmit a second call response to the first terminal based on the first call response, and the first terminal being configured to make a first network call with a second terminal through the payment terminal in response to the second call response; and
a call module, configured to make the first network call with the first terminal through the payment terminal,
the first terminal being a terminal of a first object that has successfully paid on the payment terminal, and the second terminal being a terminal of a second object for providing a payment-associated service.

Embodiments of this application further provide an apparatus for network calling. The apparatus includes:
a receiving module, configured to receive a first call request transmitted by a first terminal; and
a transmitting module, configured to: transmit a second call request to a second terminal in response to the first call request passing verification; and transmit a second call response to the first terminal based on the first call response transmitted by the second terminal, the first terminal being configured to make a first network call with the second terminal through a payment terminal in response to the second call response, the first terminal being a terminal of a first object that has successfully paid on the payment terminal, and the second terminal being a terminal of a second object for providing a payment-associated service.

According to another aspect, a computer device is provided. The computer device includes a processor and a memory. The memory has at least one computer program stored therein, and the at least one computer program is loaded and executed by the processor, to enable the computer device to implement the method for network calling according to any one of the foregoing implementations.

According to another aspect, a nonvolatile computer-readable storage medium is further provided. The nonvolatile computer-readable storage medium has at least one computer program stored therein, and the at least one computer program is loaded and executed by a processor, to enable a computer to implement the method for network calling according to any one of the foregoing implementations.

According to another aspect, a computer program or a computer program product is further provided. The computer program or the computer program product includes computer instructions, and the computer instructions are loaded and executed by a processor, to enable a computer to implement the method for network calling according to any one of the foregoing implementations.

According to the technical solutions provided in the embodiments of this application, a first terminal can make a first network call with a second terminal through a payment terminal. Based on this, a first object may communicate, through the first network call, with a second object for providing a payment-associated service, and communication is convenient. This helps improve communication efficiency, to improve interaction experience of the first object, increase frequency of performing offline payment by the first object by using the payment terminal, and improve utilization of the payment terminal. In addition, because the first network call between the first terminal and the second terminal is implemented through transit by the payment terminal, during the first network call between the first terminal and the second terminal, the first terminal does not need to learn of a social account of the second terminal, and the second terminal does not need to learn of a social account of the first terminal either, so that privacy of the social account is high. This helps improve security of the social account. Further, regardless of whether the first terminal can learn of the social account of the second terminal and whether the second terminal can learn of the social account of the first terminal, both the first terminal and the second terminal can implement the first network call through transit by the payment terminal, so that a success rate of the first network call is high.

### BRIEF DESCRIPTION OF THE DRAWINGS

FIG. 1 is a diagram of an implementation environment of a method for network calling according to an embodiment of this application.
FIG. 2 is a flowchart of a method for network calling according to an embodiment of this application.
FIG. 3 is a flowchart of another method for network calling according to an embodiment of this application.
FIG. 4 is a diagram of a display interface in a social application on a first terminal according to an embodiment of this application.
FIG. 5 is a diagram of a call initiation interface according to an embodiment of this application.
FIG. 6 is a diagram of a settings page according to an embodiment of this application.
FIG. 7 is a diagram of a call request interface according to an embodiment of this application.
FIG. 8 is a diagram of a transmission process of first call data according to an embodiment of this application.
FIG. 9 is a diagram of a device architecture according to an embodiment of this application.
FIG. 10 is a flowchart of another method for network calling according to an embodiment of this application.
FIG. 11 is a flowchart of another method for network calling according to an embodiment of this application.
FIG. 12 is a flowchart of another method for network calling according to an embodiment of this application.
FIG. 13 is a diagram of an apparatus for network calling according to an embodiment of this application.
FIG. 14 is a diagram of another apparatus for network calling according to an embodiment of this application.
FIG. 15 is a diagram of another apparatus for network calling according to an embodiment of this application.
FIG. 16 is a diagram of a structure of a computer device according to an embodiment of this application.

### DESCRIPTION OF EMBODIMENTS

To make the objectives, technical solutions, and advantages of this application clearer, the following further describes implementations of this application in detail with reference to the accompanying drawings.

Currently, offline payment is mainly performed in the following manners: collection by a cashier and payment by using a payment terminal provided by a merchant. Performing payment by using a payment terminal is convenient and can reduce pressure of a cashier. Therefore, an increasing quantity of users prefer to use a payment terminal to perform offline payment. After performing offline payment by using a payment terminal, a user may need to communicate with an object for providing a payment-associated service, for example, consult the object for providing the payment-associated service about a payment-associated problem, for example, consult about why a paid amount of a commodity is different from a price of the commodity shown on a shelf.

When the user needs to communicate with the object for providing the payment-associated service, the user needs to communicate with a cashier of a merchant face to face, or communicate with a person in charge by dialing a customer service number of the merchant. In the manner of communicating with the cashier of the merchant face to face, the user needs to find the cashier of the merchant and queue up in a queue waiting for collection by the cashier. In the manner of communicating with the person in charge by dialing the customer service number of the merchant, the user needs to find the customer service number of the merchant and contact the person in charge under guidance of a customer service person. In both manners, communication is inconvenient, leading to low communication efficiency, compromising interaction experience of the user, reducing frequency of performing offline payment by the user by using the payment terminal, and reducing utilization of the payment terminal.

Based on this, embodiments of this application provide a method for network calling. Based on the method for network calling, a user can communicate, through a first network call, with an object for providing a payment-associated service, and communication is convenient. This helps improve communication efficiency, to improve interaction experience of the user, increase frequency of performing offline payment by the user by using a payment terminal, improve utilization of the payment terminal, and reduce burden of manual cashiering. The term, involved in the following description, "some embodiments" describes subsets of all possible embodiments, but "some embodiments" may be the same subset or different subsets of all the possible embodiments and may be combined with each other without conflict.

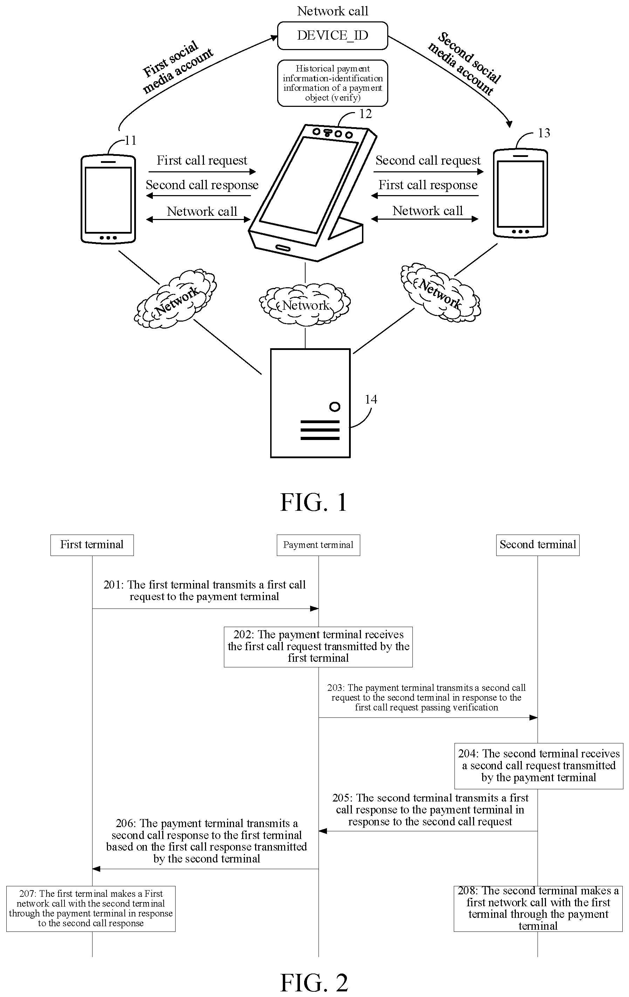

FIG. 1 is a diagram of an implementation environment of a method for network calling according to an embodiment of this application. The implementation environment may include a first terminal 11, a payment terminal 12, a second terminal 13, and a server 14.

The first terminal 11 is a terminal of a first object that has successfully paid on the payment terminal 12. In some embodiments, the first object may also be referred to as a user, a consumer object, or the like. The payment terminal 12 is a terminal provided by a merchant for the first object for self-service offline payment. The second terminal 13 is a terminal of a second object for providing a payment-associated service. In some embodiments, the second object may be a cashier of the merchant or another object of the merchant that can provide the payment-associated service.

For example, a social application is installed on both the first terminal 11 and the second terminal 13, a first social account of the first object is logged in to the social application installed on the first terminal 11, and a second social account of the second object is logged in to the social application installed on the second terminal 13. A first network call between the first terminal 11 and the second terminal 13 may be a network call between the first social account and the second social account. The social application has a network call function. The first network call in some embodiments includes an audio call and a video call that are made with a network available, and is different from a call made by dialing a mobile phone number or a fixed phone number. In some embodiments, the first network call may also be referred to as an audio/video call.

The server 14 is configured to provide a payment service for the payment terminal 12 and provide a background service for the social application. For example, the server 14 may receive biological recognition data captured by payment terminal 12, and after determining a payment account based on the biological recognition data, deduct money from the payment account and feed back a payment result to the payment terminal 12, so that the payment terminal 12 displays the payment result. For example, the server 14 can store information about a social account logged in to the social application and authorization information of the social application.

For example, the first terminal 11 establishes a communication connection to the server 14 through a wired or wireless network, the payment terminal 12 establishes a communication connection to the server 14 through a wired or wireless network, and the second terminal 13 establishes a communication connection to the server 14 through a wired or wireless network. For example, the first terminal 11 establishes a communication connection to the payment terminal 12 through a wired or wireless network. To be specific, the first terminal 11 directly communicates with the payment terminal 12, or the first terminal 11 indirectly communicates with the payment terminal 12 through transit by the server 14. For example, the second terminal 13 establishes a communication connection to the payment terminal 12 through a wired or wireless network. To be specific, the second terminal 13 directly communicates with the payment terminal 12, or the second terminal 13 indirectly communicates with the payment terminal 12 through transit by the server 14.

In some embodiments, the first terminal 11 and the second terminal 13 may be any electronic product that can perform human-computer interaction with a user through one or more of a keyboard, a touchpad, a touchscreen, a remote control, a voice interaction device, a handwriting device, or the like, for example, a personal computer (PC), a mobile phone, a smartphone, a personal digital assistant (PDA), a wearable device, a pocket PC (PPC), a tablet computer, a smart head unit, a smart television, a smart speaker, or an in-vehicle terminal. The payment terminal 12 may be any device that supports offline self-service payment, for example, a self-service cashier device, a self-service vending machine, a self-service gas station, or a self-service ticket machine.

The server 14 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence (AI) platform.

In some embodiments, the first terminal 11 can transmit a first call request to the payment terminal 12, the payment terminal 12 can transmit a second call request to the second terminal 13 in response to the first call request passing verification, the second terminal 13 can transmit a first call response to the payment terminal 12, the payment terminal 12 can transmit a second call response to the first terminal 11 based on the first call response, the first terminal 11 can make a first network call with the second terminal 13 through the payment terminal 12 in response to the second call response, and the second terminal 13 can make the first network call with the first terminal 11 through the payment terminal 12.

For example, the payment terminal 12 stores historical payment information. The historical payment information is stored in association with identification information of a payment object. The payment terminal 12 can perform verification on the first call request based on the historical payment information stored in association with the identification information of the payment object. For example, the payment terminal 12 has a virtual social account, and a first network call may be implemented, through bridging by the first social account, between the first social account logged in to the first terminal 11 and the second social account logged in to the second terminal 13. The virtual social account is configured for identifying the payment terminal 12. For example, the virtual social account may be denoted as DEVICE_ID.

A person skilled in the art can understand that the first terminal 11, the payment terminal 12, the second terminal 13, and the server 14 are merely examples, and other existing or possible future terminals or servers, if applicable to this application, also fall within the protection scope of this application and are incorporated herein by reference.

An embodiment of this application provides a method for network calling. The method for network calling is a method for conducting a network-based calling. The method may be applied to the implementation environment shown in FIG. 1. For example, the method is performed by the first terminal 11, the payment terminal 12, and the second terminal 13 through interaction. As shown in FIG. 2, the method for network calling provided in some embodiments may include the following operation 201 to operation 208.

Operation 201: The first terminal transmits a first call request to the payment terminal.

The first terminal has a payment on the payment terminal. In other words, the first terminal is a terminal that has successfully paid on the payment terminal. The first call request is configured to indicate the payment terminal to transmit a second call request to a second terminal in response to the first call request passing verification. In other words, the first call request is configured for requesting to make a first network call with the second terminal associated with the payment terminal. The second terminal is a terminal of a second object for providing a payment-associated service. For example, the payment-associated service is a service associated with payment on the payment terminal. In some embodiments, the payment-associated service may include a consultation service associated with payment on the payment terminal. The consultation service is configured for the first object to consult about a problem associated with payment on the payment terminal. For example, the consultation service may be configured for the first object to consult about why a paid amount of a commodity is different from a price of the commodity shown on a shelf or whether a payment amount meets a gift exchange condition.

When the first object wants to make a first network call with the second object, for example, the first object wants to communicate with the second object through a first network call, the first terminal transmits the first call request to the payment terminal. In some embodiments, the first object wants to communicate with the second object through a first network call may also be understood as that the first object wants to consult, through the first network call, the second object about a problem associated with payment performed on the payment terminal. The first network call is a call connection made through a network. For example, the first network call includes an audio call and a video call. The audio call is a call mode in which voice communication is performed through a network. The video call is a call mode in which voice and image communication are performed through a network.

For example, the first call request carries a first account, so that the payment terminal can perform verification on the first call request based on the first account. The first account is configured for identifying the first object. For example, that the first object pays on the payment terminal means that the first object pays on the payment terminal by using a payment account associated with a first account. In this case, the first account may be the first social account, or may be other information that has an association relationship with the first social account and that is configured for identifying the first object. The first social account is a social account logged in to a social application installed on the first terminal. The first social account may support the first object in performing social behavior such as chatting, an audio call, or a video call. In some embodiments, the first account may alternatively be an identity card number of the first object, a communication number of the first object, or the like. This is not limited in this embodiment of this application.

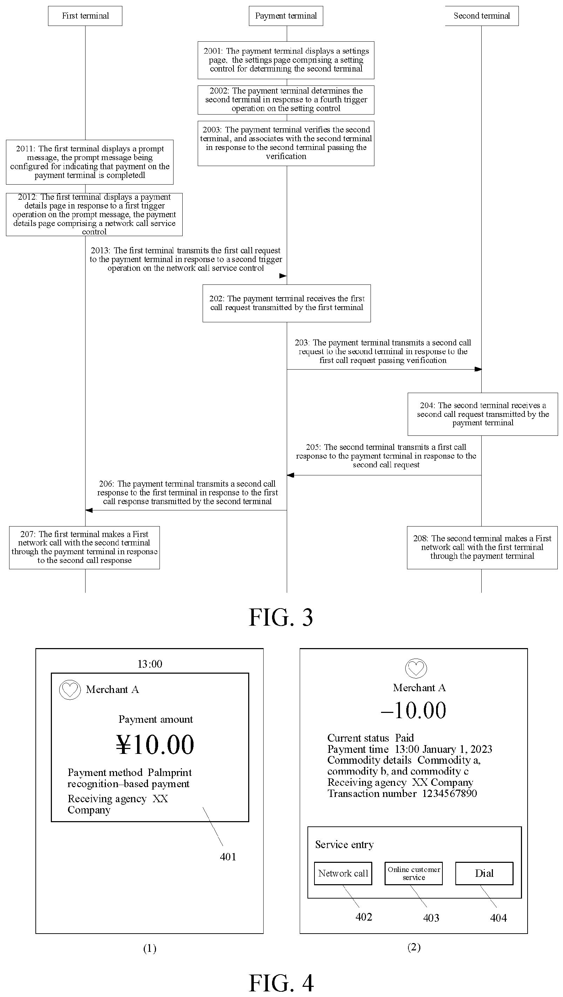

In some embodiments, as shown in a flowchart of a method for network calling shown in FIG. 3, operation 201 may include the following operation 2011 to operation 2013.

Operation 2011: The first terminal displays a prompt message, the prompt message being configured for indicating that payment on the payment terminal is completed.

After the first object successfully pays on the payment terminal, payment-related information is pushed to the first terminal. After receiving the payment-related information, the first terminal displays the prompt message for indicating that the payment on the payment terminal is completed. For example, the prompt message may include merchant information, a payment amount, a payment method, and a receiving agency.

In some embodiments, the first terminal may display the prompt message in the social application to which the first social account is logged in. For example, the social application to which the first social account is logged in provides a payment reminder page. The first terminal may display the prompt message on the payment reminder page in the social application. The payment reminder page is configured for displaying payment-related information of an order paid by using the payment account associated with the first social account.

Operation 2012: The first terminal displays a payment details page in response to a first trigger operation on the prompt message, the payment details page comprising a network call service control. The network call service control is displayed on the payment details page.

After the first terminal displays the prompt message, the first object may trigger the prompt message, for example, click/tap the prompt message. After the first object triggers the prompt message, the first terminal obtains the first trigger operation on the prompt message, and displays the payment details page in response to the first trigger operation on the prompt message. The payment details page displays details of payment on the payment terminal. For example, the payment details page displays a payment amount, commodity details, a payment method, payment time, a transaction number, and a receiving agency.

For example, in addition to the details of payment, the payment details page further displays at least one service control. The at least one service control includes the network call service control, and the network call service control is configured for enabling the first object to enjoy a network call service. In addition to the network call service control, the at least one service control may further include another service control, for example, an online customer service control or a dial service control. In some embodiments, the network call service control may also be referred to as a fast audio/video customer service control, and an audio/video call can be made to the second terminal of the second object by triggering the network call service control.

Operation 2013: The first terminal transmits the first call request to the payment terminal in response to a second trigger operation on the network call service control.

The first object triggering the network call service control indicates that the first object has a requirement for making a network call with an object of the second terminal associated with the payment terminal. In this case, the first terminal transmits the first call request to the payment terminal in response to the second trigger operation on the network call service control. The object of the second terminal is an object for providing a payment-associated service. That the first object has a requirement for making a first network call with the object of the second terminal associated with the payment terminal may also be understood as that the first object needs to communicate with the second object. A form of the network call service control is not limited in this embodiment of this application, provided that the network call service control can be triggered. For example, the network call service control may be in a form of a triggerable icon or a button.

For example, the prompt message is displayed in the social application. A display interface in the social application on the first terminal may be shown in FIG. 4. A prompt message 401 is displayed in (1) in FIG. 4. Merchant information, a payment amount, a payment method, a receiving agency, and the like are displayed in the prompt message 401. In response to a first trigger operation on the prompt message 401, a payment details page shown in (2) in FIG. 4 is displayed. On the payment details page shown in (2) in FIG. 4, the merchant information, the payment amount, a current status, payment time, commodity details, the receiving agency, a transaction number, and the like are displayed, and a plurality of service entries, such as a network call service control 402, an online customer service control 403, and a dial service control 404, are further displayed. The first terminal transmits the first call request to the payment terminal in response to a second trigger operation on the network call service control 402.

For example, a type of the first network call may include at least one of an audio call or a video call. To be specific, the network call service control includes at least one of an audio call service control or a video call service control. If the trigger operation is performed on the audio call service control, the first call request is configured for requesting to make an audio call to the second terminal. If the trigger operation is performed on the video call service control, the first call request is configured for requesting to make a video call to the second terminal.

In operation 2011 to operation 2013, the first call request is initiated based on the prompt message. This is convenient, and helps improve efficiency of initiating the first call request. In addition, the prompt message can directly indicate that the first object has successfully paid on the payment terminal. Initiating the first call request based on the prompt message can ensure that the first call request is initiated after the first terminal has successfully paid on the payment terminal. This helps increase a probability that verification on the first call request succeeds, and increase a success rate of the network call.

Operation 2011 to operation 2013 describe only an exemplary implementation of transmitting, by the first terminal, the first call request to the payment terminal, and this embodiment of this application are not limited thereto. In some embodiments, an implementation of transmitting, by the first terminal, the first call request to the payment terminal may alternatively be: The first terminal displays a merchant service page, the merchant service page displaying a network call service control; and transmits the first call request to the payment terminal in response to a trigger operation on the network call service control. The merchant service page is a service page provided by a merchant providing the payment terminal. The merchant service page may be a page in an official account, or may be a page in an embedded program. This is not limited in this embodiment of this application. The network call service control may be directly displayed on the merchant service page, or may be hidden in a service on the merchant service page. This is not limited in this embodiment of this application.

In some embodiments, an implementation of transmitting, by the first terminal, the first call request to the payment terminal may alternatively be: The first terminal displays a prompt message, the prompt message being configured for indicating that payment on the payment terminal is completed; displays a network call service control in an associated area of the prompt message; and transmits the first call request to the payment terminal in response to a second trigger operation on the network call service control. For example, the associated area of the prompt message may be a surrounding area of a display area of the prompt message. For example, the surrounding area may include but is not limited to an area on the right, an area on the left, a lower area, an upper area, an upper right area, a lower left area, and the like.

In some embodiments, before the first network call is made with the second terminal through the payment terminal, the method further includes: The first terminal displays a call initiation interface, a virtual social account of the payment terminal being displayed on the call initiation interface. In other words, the call initiation interface comprises a virtual social account of the payment terminal. In this manner, during the first network call, a social account of the second terminal is not displayed on an interface of the first terminal, so that security of the social account of the second terminal can be ensured.

The virtual social account is configured for identifying the payment terminal. A type of the virtual social account is not limited in this embodiment of this application, provided that the virtual social account can uniquely identify a payment terminal.

In some embodiments, the virtual social account may be a sequence number displayed on the payment terminal in plaintext. For example, the sequence number may be a serial number (SN), and the SN is a string-type sequence number.

In some embodiments, the virtual social account may alternatively be device identity document (ID) information configured for implicitly identifying the payment terminal. The ID information is not displayed in plaintext. Using the ID information as the virtual social account can further improve account security. For example, the payment terminal has an independent secure element (SE), and the ID information is information, on the SE, that is burned at delivery of the device and that is configured for implicitly identifying the payment terminal. In some embodiments, in addition to the ID information, a pair of keys (a public key and a private key) is further burned into the SE. The public key and the private key may be configured for the payment terminal to perform device verification on a terminal to be associated with the payment terminal and then associate with the terminal on which the second terminal passes verification.

In some embodiments, in addition to the virtual social account, at least one of a virtual avatar corresponding to the virtual social account, prompt information, and a hang-up control may be further displayed on the call initiation interface. The virtual avatar corresponding to the virtual social account may be an avatar preset by a maintenance person of the payment terminal, or may be a randomly generated avatar, or the like. The prompt information is configured for indicating that a call has not been accepted.

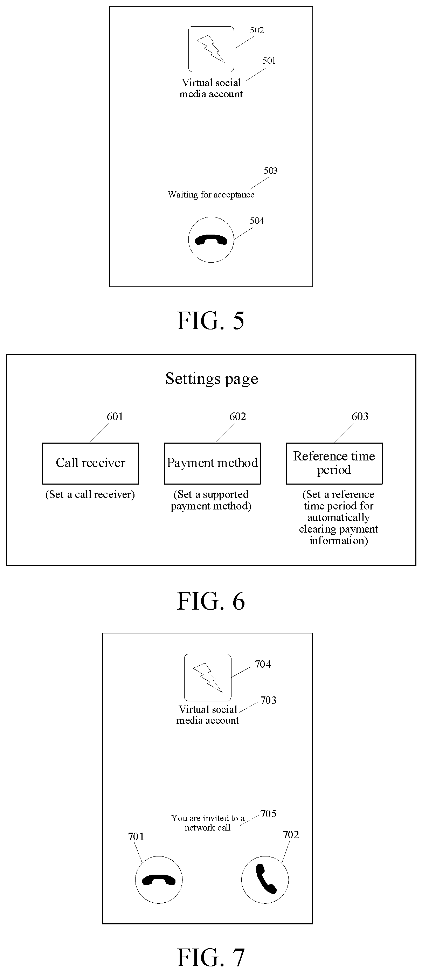

For example, the call initiation interface is shown in FIG. 5. On the call initiation interface shown in FIG. 5, a virtual social account 501, a virtual avatar 502 corresponding to the virtual social account, prompt information (Waiting for acceptance) 503, and a hang-up control 504 are displayed.

In some embodiments, the call initiation interface may alternatively be displayed in response to the second trigger operation on the network call service control. In this case, a sequence of displaying the call initiation interface by the first terminal and transmitting the first call request by the first terminal to the payment terminal is not limited in this embodiment of this application.

In some embodiments, before transmitting the first call request to the payment terminal, the first terminal further needs to obtain first authorization information. The first authorization information is configured for authorizing the first terminal to make a second network call with the payment terminal.

In some embodiments, the first terminal makes a first network call (i.e., a first network call connection) with the second terminal through the payment terminal. To be specific, the first terminal makes a second network call (i.e., a second network call connection) with the payment terminal, and the payment terminal makes a third network call (i.e., a third network call connection) with the second terminal, so that the first network call between the first terminal and the second terminal is implemented through bridging by the payment terminal. It can be learned from the foregoing analysis that the first terminal needs to make a second network call with the payment terminal. Therefore, before the second network call, the first authorization information configured for authorizing the first terminal to make a second network call with the payment terminal needs to be first obtained, to ensure that the network call can be smoothly performed.

In some embodiments, that the first terminal makes a second network call with the payment terminal means that the first social account of the first terminal makes a second network call with the virtual social account of the payment terminal. After the first authorization information is obtained, even if no social relationship is established between the first social account and the virtual social account, the second network call can be implemented between the first social account and the virtual social account, to increase a success rate of the second network call. In some embodiments, that no social relationship is established between the first social account and the virtual social account may also be referred to as that the first social account and the virtual social account are not in a friendship.

For example, before performing the method for network calling in this application, the first terminal may display an authorization option in the social application. The authorization option includes an authorization agreeing option and an authorization rejection option. The authorization agreeing option is configured for indicating that the first terminal is allowed to make a second network call with the payment terminal. The authorization rejection option is configured for indicating that the first terminal is not allowed to make a second network call with the payment terminal. The first terminal obtains the first authorization information in response to a trigger operation on the authorization agreeing option in the authorization option. For example, when no social relationship is established between the first social account and the virtual social account, the authorization agreeing option may alternatively be configured for indicating that the first social account is allowed to make or accept an audio/video call to a social account to which no social relationship is established, and the authorization rejection option may alternatively be configured for indicating that the first social account is not allowed to make or accept an audio/video call to a social account to which no social relationship is established.

A payment method used by the first object to pay on the payment terminal is not limited in this embodiment of this application, and is related to a payment method supported by the payment terminal. In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment. To be specific, the first object can pay on the payment terminal through palm print recognition-based payment, facial recognition-based payment, fingerprint recognition-based payment, iris recognition-based payment, gait recognition-based payment, retina recognition-based payment, vein recognition-based payment, or payment code recognition-based payment. The payment terminal supports abundant payment methods. This helps improve flexibility of paying by the first object on the payment terminal, and improve payment experience of the first object, to increase frequency of performing offline payment by the first object by using the payment terminal, and improve utilization of the payment terminal.

In some embodiments, palm print recognition is a technology for exchanging palm multimedia information for identity information. For example, the palm multimedia information includes a palm image, and the palm image is an image including a palm of the first object. A process of paying, by the first object, on the payment terminal through palm print recognition-based payment includes: The payment terminal invokes a camera to capture a video stream of the palm of the first object, determines a target palm image of the first object based on the video stream, and transmits the target palm image to the server. The server is configured to extract a feature of the target palm image, perform database-wide search and recognition based on the feature, and if a first object matching the feature is recognized, deduct money from a payment account of the first object.

For example, a palm swiping application runs on the payment terminal, and that the payment terminal invokes the camera to capture the video stream of the palm of the first object is that the palm swiping application installed on the payment terminal invokes the camera to capture the video stream of the palm of the first object.

When using the palm print recognition-based payment function, the first object may align the palm with the camera of the payment terminal. Correspondingly, the camera may capture the video stream of the palm of the first object. In some embodiments, the camera may be a low-cost conventional camera, or may be a three-dimensional (3D) camera with an image detection and filtering function. Compared with the conventional camera, the 3D camera additionally includes software and hardware related to image detection and filtering, for example, software and hardware related to liveness filtering, or software and hardware related to image quality detection and filtering. For example, the 3D camera may include a depth camera and an infrared camera. The liveness filtering is configured for detecting whether a captured palm image corresponds to a living palm, performing filtering, and retaining a palm image corresponding to a living palm. The image quality detection and filtering is configured for detecting image quality, for example, detecting indicators such as a palm size, a palm angle, image contrast, image brightness, and image definition in a captured image, performing filtering based on the detection indicators, and retaining a palm image with high image quality.

For example, the target palm image may be a palm image retained after the camera filters video frames in the video stream. For example, when the camera is a 3D camera additionally including software and hardware related to liveness filtering and image quality detection and filtering, the target palm image may be a palm image retained after the camera performs at least one of liveness filtering and optimization filtering on the video frames in the video stream. The liveness filtering may perform filtering and retain a palm image corresponding to a living palm. The optimization filtering may perform filtering and retain a palm image whose image quality meets a quality requirement. The quality requirement may be set based on experience, or may be flexibly adjusted based on an application scenario. In some embodiments, the quality requirement includes at least one of the following: A palm size is within a reference size range, a palm angle is within a reference angle range, image contrast is within a reference contrast range, image brightness is within a reference brightness range, or image definition is not lower than a definition threshold. All of the reference size range, the reference angle range, the reference contrast range, the reference brightness range, and the definition threshold may be set based on experience, or may be flexibly adjusted based on an application scenario. This is not limited in this embodiment of this application.

The payment account of the first object may be a payment account associated with payment code information of the first object. In this case, a process of deducting, by the first terminal, money from the payment account of the first object includes: The first terminal obtains the payment code information of the first object, and deducts money from the payment account associated with the payment code information. The payment code information is configured for identifying a payment code of the first object. The payment code is an electronic payment tool. The payment code may be in a form of a two-dimensional code or a barcode. The payment code of the first object is associated with the payment account of the first object, and the associated payment account can be determined based on the payment code information of the first object, to deduct money from the payment account.

In some embodiments, facial recognition is a technology for exchanging facial multimedia information for identity information. For example, the facial multimedia information includes a face image, and the face image is an image including a face of the first object. A process of paying, by the first object, on the payment terminal through facial recognition-based payment includes: The payment terminal invokes a camera to capture a video stream of the face of the first object, determines a target face image of the first object based on the video stream, and transmits the target face image to the server. The server is configured to extract a feature of the target face image, perform database-wide search and recognition based on the feature, and if a first object matching the feature is recognized, deduct money from a payment account of the first object.

In some embodiments, fingerprint recognition is a technology for exchanging fingerprint multimedia information for identity information. For example, the fingerprint multimedia information includes a fingerprint image, and the fingerprint image is an image including a fingerprint of the first object. A process of paying, by the first object, on the payment terminal through fingerprint recognition-based payment includes: The payment terminal invokes a camera to capture a video stream of the fingerprint of the first object, determines a target fingerprint image of the first object based on the video stream, and transmits the target fingerprint image to the server. The server is configured to extract a feature of the target fingerprint image, perform database-wide search and recognition based on the feature, and if a first object matching the feature is recognized, deduct money from a payment account of the first object.

In some embodiments, iris recognition is a technology for exchanging iris multimedia information for identity information. For example, the iris multimedia information includes an iris image, and the iris image is an image including an iris of the first object. A process of paying, by the first object, on the payment terminal through iris recognition-based payment includes: The payment terminal invokes a camera to capture a video stream of the iris of the first object, determines a target iris image of the first object based on the video stream, and transmits the target iris image to the server. The server is configured to extract a feature of the target iris image, perform database-wide search and recognition based on the feature, and if a first object matching the feature is recognized, deduct money from a payment account of the first object.

In some embodiments, gait recognition is a technology for exchanging gait multimedia information for identity information. For example, the gait multimedia information includes a gait image, the gait image is an image including a gait of the first object, and the gait is a walking posture. A process of paying, by the first object, on the payment terminal through gait recognition-based payment includes: The payment terminal invokes a camera to capture a video stream of the gait of the first object, determines a target gait image of the first object based on the video stream, and transmits the target gait image to the server. The server is configured to extract a feature of the target gait image, perform database-wide search and recognition based on the feature, and if a first object matching the feature is recognized, deduct money from a payment account of the first object.

In some embodiments, retina recognition is a technology for exchanging retina multimedia information for identity information. For example, the retina multimedia information includes a retina image, and the retina image is an image including a retina of the first object. A process of paying, by the first object, on the payment terminal through retina recognition-based payment includes: The payment terminal invokes a camera to capture a video stream of the retina of the first object, determines a target retina image of the first object based on the video stream, and transmits the target retina image to the server. The server is configured to extract a feature of the target retina image, perform database-wide search and recognition based on the feature, and if a first object matching the feature is recognized, deduct money from a payment account of the first object.

In some embodiments, vein recognition is a technology for exchanging vein multimedia information for identity information. For example, the vein multimedia information includes a vein image, and the vein image is an image including a vein of the first object. A process of paying, by the first object, on the payment terminal through vein recognition-based payment includes: The payment terminal invokes a camera to capture a video stream of the vein of the first object, determines a target vein image of the first object based on the video stream, and transmits the target vein image to the server. The server is configured to extract a feature of the target vein image, perform database-wide search and recognition based on the feature, and if a first object matching the feature is recognized, deduct money from a payment account of the first object.

A principle of paying, by the first object, on the payment terminal through facial recognition-based payment, fingerprint recognition-based payment, iris recognition-based payment, gait recognition-based payment, retina recognition-based payment, or vein recognition-based payment is identical to a principle of paying, by the first object, on the payment terminal through palm print recognition-based payment. For a specific implementation process of paying, by the first object, on the payment terminal through facial recognition-based payment, fingerprint recognition-based payment, iris recognition-based payment, gait recognition-based payment, retina recognition-based payment, or vein recognition-based payment, refer to the specific implementation process of paying, by the first object, on the payment terminal through palm print recognition-based payment. Details are not described herein again.

In some embodiments, a process of paying, by the first object, on the payment terminal through payment code recognition-based payment includes: The payment terminal captures a payment code image of the first object, and transmits the payment code image to the server. The server recognizes payment code information corresponding to the payment code image, and deducts money from a payment account associated with the payment code information.

Operation 202: The payment terminal receives the first call request transmitted by the first terminal.

After the first terminal transmits the first call request to the payment terminal, the payment terminal receives the first call request transmitted by the first terminal.

Operation 203: The payment terminal transmits a second call request to the second terminal in response to the first call request passing verification.

After receiving the first call request, the payment terminal performs verification on the first call request. After determining the first call request passes verification, the payment terminal performs a subsequent operation, to implement a first network call between the first terminal and the second terminal. When the verification on the first call request fails, the payment terminal does not perform a subsequent operation, and the payment terminal may directly return error information to the first terminal. The error information is configured for indicating that communication cannot be performed through the network call. In this manner, reliability of the network call can be ensured.

In some embodiments, the first call request carries the first account, and a process of performing, by the payment terminal, verification on the first call request includes: in response to historical payment information comprising first payment information associated with the first account and the first payment information satisfying a preset constraint condition, determining that the first call request passes verification, the preset constraint condition being that at least one of the following is satisfied: an interval between a payment time of the first payment information and a current time is not greater than a preset interval; and an order amount in the first payment information is greater than a preset amount.

The historical payment information is information related to an order that is successfully paid and that is stored on the payment terminal. The historical payment information is stored in association with identification information of a payment object. Therefore, the payment terminal may search, based on the first account, the historical payment information for the first payment information associated with the first account; and when the historical payment information includes the first payment information associated with the first account, further verify whether the first payment information meets the preset constraint condition, and when the first payment information meets the preset constraint condition, determine that the first call request passes verification; or when the historical payment information does not include the first payment information associated with the first account or when the first payment information does not meet the preset constraint condition, determine that the verification on the first call request fails. Based on this, verification is performed on the first call request through two layers of verification: whether the historical payment information includes the first payment information and whether the first payment information meets the preset constraint condition. This helps improve reliability of the verification, to improve reliability of the network call.

The preset constraint condition may be set based on experience or flexibly adjusted based on an application scenario. This is not limited in this embodiment of this application. For example, that the first payment information meets the preset constraint condition may be: An interval between payment time of the first payment information and current time is not greater than a preset interval. The preset interval is set based on experience. For example, the preset interval may be 3 days or 7 days. For example, that the first payment information meets the preset constraint condition may alternatively be: An order amount in the first payment information is greater than a preset amount. The preset amount is set based on experience. For example, the preset amount may be 3 CNY.

In some embodiments, the historical payment information may be payment information within a reference time period, and the reference time period may be set based on experience. For example, the reference time period may be within 7 days. To be specific, the payment terminal may automatically clear payment information outside the reference time period, to prevent the payment information from occupying excessive storage space of the payment terminal.

In some embodiments, in response to that the historical payment information includes the first payment information associated with the first account, the payment terminal may alternatively directly determine that the first call request passes verification.

After determining that the first call request passes verification, the payment terminal transmits the second call request to the second terminal. The second call request is configured for requesting to make a third network call with the second terminal. For example, the second call request may include the virtual social account of the payment terminal, so that the second terminal displays, on a call request interface, the virtual social account of the payment terminal.

In some embodiments, before the payment terminal transmits the second call request to the second terminal, the payment terminal needs to first associate with the second terminal, so that the payment terminal can learn of a specific terminal to which the second call request is to be sent. In some embodiments, as shown in FIG. 3, before operation 203, operation 2001 to operation 2003 are further included, to enable the payment terminal to associate with the second terminal.

Operation 2001: The payment terminal displays a settings page, the settings page comprising a setting control for determining the second terminal.

The settings page is a page for performing setting on the payment terminal, and the setting control for determining the second terminal is an control that is displayed on the settings page and that is configured for setting the call receiver. For example, the setting control may be a button or an icon. In addition to the setting control for the call receiver, the settings page may further include a setting control for other information, for example, a setting control for a reference time period for automatically clearing payment information, or a setting control for a supported payment method. In some embodiments, a function of each setting control displayed on the settings page may be further displayed in an associated area of the setting control, so that a setting person of the payment terminal can clearly understand the function of each setting control, to improve setting efficiency. The associated area of the setting control may be set based on experience, or may be flexibly adjusted based on an application scenario, a layout of the settings page, or the like. For example, the associated area of the setting control may be an area below the setting control or an area above the setting control.

For example, the payment terminal displays the settings page in response to a trigger operation on a first control. The first control may be displayed at any position, for example, a lower right position or an upper right position, on an interface of the payment terminal.

For example, the settings page may be shown in FIG. 6. On the settings page shown in FIG. 6, a plurality of setting controls are displayed, for example, a setting control 601 for a call receiver, a setting control 602 for a supported payment method, and a setting control 603 for a reference time period for automatically clearing payment information. A function of each setting control is described below the setting control. A function of the setting control 601 for the call receiver is to set the call receiver. A function of the setting control 602 for the supported payment method is to set the supported payment method. A function of the setting control 603 for the reference time period for automatically clearing the payment information is to set the reference time period for automatically clearing the payment information.

Operation 2002: The payment terminal determines the second terminal in response to a fourth trigger operation on the setting control.

The trigger operation on the setting control is configured for setting the call receiver. In some embodiments, an object triggering the setting control is considered as the second object, and a call receiver that is set by the second object by triggering the setting control is determined as the second terminal.

In some embodiments, an implementation of determining the second terminal based on the trigger operation on the setting control may be: capturing an account image in response to the fourth trigger operation on the setting control, recognizing the account image to obtain a social account, and using a terminal to which the social account is logged in as the second terminal.

After obtaining the trigger operation on the setting control, the payment terminal may start the camera and display prompt information on an interface. The prompt information is configured for indicating the second object to place an identification code of a social account in a capture area of the camera. After the second object places the identification code of the social account in the capture area of the camera, the camera may capture an account image. The account image is an image including the identification code of the social account of the second object. For example, the identification code of the social account of the second object is configured for identifying the social account of the second object. For example, the identification code of the social account of the second object may be a two-dimensional code or a barcode of the social account of the second object.

After capturing the account image, the payment terminal can recognize the account image to obtain the identification code of the social account, and then determine a social account identified by the identification code of the social account, and use a terminal to which the social account is logged in as the second terminal. For example, the social account obtained by recognizing the account image is the social account of the second object (which may be referred to as a second social account).

In some embodiments, an implementation of determining the second terminal in response to a fourth trigger operation on the setting control may alternatively be: recognizing the second terminal via near field communication, NFC, in response to the fourth trigger operation on the setting control.

After obtaining the trigger operation on the setting control, the payment terminal may enable the NFC function to perform device recognition. The second object enables the terminal to which the social account is logged in to approach (or touch) the payment terminal, so that the payment terminal recognizes the terminal to which the social account is logged in, and uses the recognized terminal to which the social account is logged in as the second terminal. The social account logged in to the second terminal is a social account of the second object (which may be referred to as a second social account).

In some embodiments, the second terminal may be determined by capturing the account image of the social account, or the second terminal may be determined by using the NFC function. The second terminal is determined in various manners, to help improve flexibility of setting the second terminal. In the manner of determining the second terminal by capturing the account image of the social account, no NFC function needs to be configured or enabled for the second terminal, and a requirement for the second terminal is low. This helps enlarge an application scope of the second terminal. In the case of determining the second terminal by using the NFC function, the second terminal can be directly recognized by using the NFC function, and an amount of calculation for determining the second terminal is small. This helps improve efficiency of determining the second terminal.

Operation 2003: The payment terminal verifies the second terminal. The payment terminal associates with the second terminal in response to the second terminal passing the verification.

After the set second terminal is determined, verification is performed based on the second terminal, and the second terminal is associated only when the verification succeeds, to ensure security of network calling. The second terminal associated with the payment terminal is a call receiver. In some embodiments, if the verification fails, information for indicating that a call receiver needs to be reset is displayed on an interface.

In some embodiments, a process of verifying the second terminal may include operation 401 to operation 405.

Operation 401: The payment terminal transmits a public key of the payment terminal to the second terminal.

The payment terminal has a pair of keys, and the pair of keys includes the public key and a private key. The public key may be configured for encryption, and the private key may be configured for decryption. The payment terminal may transmit the public key of the payment terminal to the second terminal, so that the second terminal encrypts data by using the public key of the payment terminal.

Operation 402: The second terminal receives the public key of the payment terminal, encrypts first data based on the public key of the payment terminal to obtain second data, and transmits the second data to the payment terminal.

The first data may be any data that can be obtained by the second terminal. For example, the first data may be a random number generated by the second terminal. For another example, the first data may be a piece of data stored on the second terminal.

Operation 403: The payment terminal receives the second data from the second terminal, and decrypts the second data by using the private key of the payment terminal to obtain third data, and transmits the third data to the second terminal.

Operation 404: The second terminal transmits a verification pass response to the payment terminal in response to that the third data is identical to the first data.

Operation 405: In response to the verification pass response, the payment terminal determines that the second terminal passes verification.

After obtaining the verification pass response, the payment terminal determines that communication between the payment terminal and the second terminal is secure, and therefore determines that the second terminal passes verification.

In operation 401 to operation 405, verification is implemented through a plurality of times of interaction between the payment terminal and the second terminal. This helps ensure reliability of the verification.

The implementation method for verifying the second terminal in operation 401 to operation 405 is a method for performing verification based on a public key encryption algorithm, and this embodiment of this application is not limited thereto. In some embodiments, a method for verifying the second terminal may alternatively be another method. For example, the method for verifying the second terminal may alternatively be: The payment terminal transmits fourth data and a public key of the payment terminal to the second terminal. The public key of the payment terminal is configured to indicate the second terminal to encrypt the fourth data by using the public key of the payment terminal to obtain fifth data. The second terminal receives the fourth data and the public key of the payment terminal, encrypts the fourth data by using the public key of the payment terminal to obtain fifth data, and transmits the fifth data to the payment terminal. The payment terminal decrypts the fifth data by using a private key of the payment terminal to obtain sixth data; and in response to that the sixth data is identical to the fourth data, determines that the second terminal passes verification. The fourth data may be any data that can be obtained by the payment terminal. For example, the fourth data may be a random number generated by the payment terminal. For another example, the fourth data may be a piece of data stored on the payment terminal.

Further, the foregoing process of associating with the second terminal based on operation 2001 to operation 2003 is merely exemplary descriptions. In some embodiments, operation 2003 may alternatively not be performed. To be specific, after the second terminal is determined, the second terminal is directly associated, to improve association efficiency.

Operation 204: The second terminal receives the second call request transmitted by the payment terminal.

After the payment terminal transmits the second call request to the second terminal, the second terminal receives the second call request transmitted by the payment terminal.

In some embodiments, before the second terminal receives the second call request transmitted by the payment terminal, the method further includes: The second terminal obtains second authorization information, the second authorization information being configured for authorizing the second terminal to make a third network call with the payment terminal.

In some embodiments, the first terminal makes a first network call with the second terminal through the payment terminal. To be specific, the first terminal makes a second network call with the payment terminal, and the payment terminal makes a third network call with the second terminal, so that the first network call between the first terminal and the second terminal is implemented through the payment terminal. It can be learned from the foregoing analysis that the second terminal needs to make a third network call with the payment terminal. Therefore, before the third network call, the second authorization information configured for authorizing the second terminal to make a third network call with the payment terminal needs to be first obtained, to ensure that the third network call can be smoothly performed.

In some embodiments, the second terminal makes a third network call with the payment terminal means that the second social account of the second terminal makes a third network call with the virtual social account of the payment terminal. After the second authorization information is obtained, even if no social relationship is established between the second social account and the virtual social account, the third network call can be implemented between the second social account and the virtual social account, to increase a success rate of the network call. In some embodiments, that no social relationship is established between the second social account and the virtual social account may also be referred to as that the second social account and the virtual social account are not in a friendship. The second social account is a social account logged in to a social application installed on the second terminal. The second social account may support the second object in performing social behavior such as chatting, an audio call, or a video call.

For example, before performing the method for network calling in this application, the second terminal may display an authorization option in the social application. The authorization option includes an authorization agreeing option and an authorization rejection option. The authorization agreeing option is configured for indicating that the second terminal is allowed to make a third network call with the payment terminal. The authorization rejection option is configured for indicating that the second terminal is not allowed to make a third network call with the payment terminal. The second terminal obtains the second authorization information in response to a trigger operation on the authorization agreeing option in the authorization option. For example, when no social relationship is established between the second social account and the virtual social account, the authorization agreeing option may alternatively be configured for indicating that the second social account is allowed to make or accept an audio/video call to a social account to which no social relationship is established, and the authorization rejection option may alternatively be configured for indicating that the second social account is not allowed to make or accept an audio/video call to a social account to which no social relationship is established.

Operation 205: The second terminal transmits a first call response to the payment terminal in response to the second call request.

The first call response indicates the payment terminal to transmit a second call response to a first terminal based on the first call response. The second call response being configured to indicate the first terminal to make a first network call with the second terminal through the payment terminal. In other words, the first call response indicates that the second terminal allows the first terminal to make a first network call with the second terminal through the payment terminal.

In some embodiments, the second terminal allows, by default, the first terminal to make a first network call with the second terminal through the payment terminal. In this case, after receiving the second call request, the second terminal directly transmits the first call response to the payment terminal.

In some embodiments, the second terminal determines, based on an operation of the second object, whether to allow the first terminal to make a first network call with the second terminal through the payment terminal. In this case, after obtaining the second call request, the second terminal may display a call request interface according to the second call request, the virtual social account corresponding to the payment terminal and a call acceptance control being displayed on the call request interface, and the virtual social account being configured for identifying the payment terminal; and transmit the first call response to the payment terminal in response to a trigger operation on the call acceptance control. For example, the virtual social account may be carried in the second call request and transmitted to the second terminal together with the second call request.

In this manner, willingness of the second object is respected, to help improve network call experience of the second object. In addition, the virtual social account is displayed on the call request interface. Therefore, during the network call, a social account of the first terminal is not displayed on an interface of the second terminal, so that security of the social account of the first terminal can be ensured.

For example, the call request interface includes the call acceptance control ( i.e., a call acceptance option) and a call rejection control ( i.e., a call rejection option). If the second object triggers the call acceptance control, the second terminal determines to allow the first terminal to make a first network call with the second terminal through the payment terminal, and transmits the first call response to the payment terminal. In other words, the second terminal transmits the first call response to the payment terminal in response to a trigger operation on the call acceptance control on the call request interface. If the second object triggers the call rejection control, the second terminal determines not to allow the first terminal to make a first network call with the second terminal through the payment terminal, and transmits a call rejection response to the payment terminal to terminate a network call process. In some embodiments, the call acceptance control and the call rejection control may be displayed in different colors for ease of distinguishing. For example, the call acceptance control may be displayed in green, and the call rejection control may be displayed in red.

In some embodiments, in addition to the virtual social account, the call acceptance control, and the call rejection control, the call request interface may further display at least one of a virtual avatar corresponding to the virtual social account and prompt information. The virtual avatar corresponding to the virtual social account may be an avatar preset by a maintenance person of the payment terminal, or may be a randomly generated avatar, or the like. The prompt information is configured for indicating an invitation to participate in a network call.

For example, the call request interface is shown in FIG. 7. On the call request interface shown in FIG. 7, a virtual social account 703, a virtual avatar 704 corresponding to the virtual social account, and prompt information (You are invited to a network call) 705 are displayed. In addition, a call rejection option 701 and a call acceptance control 702 are further displayed. The second terminal transmits the first call response to the payment terminal in response to a trigger operation on the call acceptance control 702.

Operation 206: The payment terminal transmits a second call response to the first terminal in response to receiving, from the second terminal, a first call response to the second call request. The second call response is configured to indicate the first terminal to make a first network call with the second terminal through the payment terminal. The first terminal receives a second call response from the payment terminal, wherein the second call response is transmitted by the payment terminal in response to a first call response, and the first call response is transmitted by the second terminal in response to the second call request. The second call response indicates the first terminal to make a first network call with the second terminal through the payment terminal.

After obtaining the first call response transmitted by the second terminal, the payment terminal determines that the second terminal allows the first terminal to make a first network call with the second terminal through the payment terminal. In this case, the payment terminal transmits the second call response to the first terminal. The second call response is configured for notifying the first terminal that the second terminal allows the first terminal to make a first network call with the second terminal through the payment terminal.

For example, the second call response may be the same as the first call response. For example, the second call response may alternatively be different from the first call response. For example, the first call response carries the second social account of the second object, and the second call response carries the virtual social account of the payment terminal.

Operation 207: The first terminal makes a first network call with the second terminal through the payment terminal in response to the second call response.

After the payment terminal transmits the second call response to the first terminal, the first terminal receives the second call response. After receiving the second call response, the first terminal can determine that the second terminal allows the first terminal to make a first network call with the second terminal through the payment terminal, and then make a first network call with the second terminal through the payment terminal.

Before the first terminal makes a first network call with the second terminal through the payment terminal, both a second network call channel (i.e., a second network call connection) between the first terminal and the payment terminal and a third network call channel (i.e., a third network call connection) between the payment terminal and the second terminal are established. Both the second network call channel between the first terminal and the payment terminal and the third network call channel between the payment terminal and the second terminal are two-way channels. To be specific, a process of establishing the second network call channel between the first terminal and the payment terminal is implemented by establishing a one-way network call channel from the first terminal to the payment terminal and establishing a one-way network call channel from the payment terminal to the first terminal, and a process of establishing the third network call channel between the payment terminal and the second terminal is implemented by establishing a one-way network call channel from the payment terminal to the second terminal and establishing a one-way network call channel from the second terminal to the payment terminal.

For example, a process of establishing the second network call channel between the first terminal and the payment terminal and the third network call channel between the payment terminal and the second terminal includes: After the second terminal transmits the first call response to the payment terminal, the second terminal establishes the one-way network call channel from the second terminal to the payment terminal. After the payment terminal receives the first call response, the payment terminal establishes the one-way network call channel from the payment terminal to the second terminal. In this way, the network call channel between the payment terminal and the second terminal is established. After the payment terminal transmits the second call response to the first terminal, the payment terminal establishes the one-way network call channel from the payment terminal to the first terminal. After the first terminal receives the second call response, the first terminal establishes the one-way network call channel from the first terminal to the payment terminal. In this way, the first network call channel between the first terminal and the payment terminal is established.

In some embodiments, a process of making, by the first terminal, a first network call with the second terminal through the payment terminal includes at least one of the following: The first terminal obtains first call data, and transmits the first call data to the second terminal through the payment terminal; and the first terminal receives second call data transmitted by the payment terminal, the second call data being obtained by the second terminal and transmitted to the payment terminal. In other words, the process includes at least one of: transmitting first call data to the second terminal through the payment terminal; and receiving, through the payment terminal, second call data transmitted by the second terminal.

Operation 208: The second terminal makes a first network call with the first terminal through the payment terminal.

In a process of making, by the first terminal, a first network call with the second terminal through the payment terminal, the second terminal also makes the first network call with the first terminal through the payment terminal.

In some embodiments, that the second terminal makes a first network call with the first terminal through the payment terminal includes at least one of the following: receiving, through the payment terminal, first call data transmitted by the first terminal; transmitting second call data to the first terminal through the payment terminal. For example, the second terminal obtains second call data, and transmits the second call data to the first terminal through the payment terminal; and receives first call data transmitted by the payment terminal, the first call data being obtained by the first terminal and transmitted to the payment terminal.

It can be known from the foregoing content that the first network call between the first terminal and the second terminal is implemented through bridging by the payment terminal. During the first network call between the first terminal and the second terminal, the payment terminal performs a function of forwarding the first call data of the first terminal and the second call data of the second terminal, and does not generate call data. In other words, during the first network call between the first terminal and the second terminal, the first call data of the first terminal is forwarded to the second terminal through the payment terminal, and the second call data of the second terminal is forwarded to the first terminal through the payment terminal.

In some embodiments, the first terminal makes a first network call with the second terminal through the payment terminal, so that the first social account logged in to the first terminal makes, through the virtual social account of the payment terminal, a first network call with the second social account logged in to the second terminal. The second terminal makes a first network call with the first terminal through the payment terminal, so that the second social account logged in to the second terminal makes, through the virtual social account corresponding to the payment terminal, a first network call with the first social account logged in to the first terminal. A social relationship may or may not be established between the first social account and the second social account. To be specific, regardless of whether a social relationship is established between the first social account and the second social account, a first network call can be implemented between the first social account and the second social account through bridging by the virtual social account.

In the method for network calling provided in some embodiments, an audio/video call capability of the social application is reused. A role of the virtual social account is a common virtual friend of the two social accounts: the first social account and the second social account. This is equivalent to that the first social account makes an audio/video call to a friend (the virtual social account), and then the friend (the virtual social account) forwards the audio/video call to the second social account. In this way, a network call can be implemented between the first social account and the second social account that are not friends of each other.

The first call data is call data obtained by the first terminal, and the second call data is call data obtained by the second terminal. In some embodiments, the first call data is obtained by the first terminal by encoding audio or a video captured by an audio/video capture module in the first terminal, and the second call data is obtained by the second terminal by encoding audio or a video captured by an audio/video capture module in the second terminal. A coding format for audio and a video is not limited in this embodiment of this application. For example, OPUS (a lossy sound coding format), an Internet low bitrate codec (iLBC), or advanced audio coding (AAC) may be configured for audio, and H.264 (a highly compressed digital video codec standard), H.265 (also referred to as high-efficiency video coding (HEVC)), VP8 (an open source video coding format), or VP9 (an open source video coding format) may be configured for a video.

The audio/video capture module is a module for capturing audio/video data in a terminal, and includes a camera, a microphone, and the like. Different types of terminals may have same or different audio/video capture modules. For example, an audio/video capture module of a PC is a core audio module, an audio/video capture module of a Macintosh (Mac, a personal consumer computer) terminal is a core audio module, an audio/video capture module of an Android terminal is an audio record module, and an audio/video capture module of an iOS (a mobile operating system) terminal is an audio unit module.

Call data (the first call data and the second call data) is transmitted based on an audio/video protocol. The audio/video protocol is a protocol for transmitting audio/video data on a network. For example, the audio/video protocol includes the real-time transport protocol (RTP), the real-time control protocol (RTCP), the transmission control protocol (TCP), and the user datagram protocol (UDP). For example, a process of transmitting the call data may be implemented by packetizing the call data and sequentially transmitting data packets.

After receiving the second call data, the first terminal needs to decode the second call data to restore the second call data to raw audio/video data. After decoding, the first terminal may render decoded audio/video data, for example, display the video data on a screen of the first terminal, and play the audio data through a speaker of the first terminal. After receiving the first call data, the second terminal needs to decode the first call data to restore the first call data to raw audio/video data. After decoding, the second terminal may render decoded audio/video data, for example, display the video data on a screen of the second terminal, and play the audio data through a speaker of the second terminal.

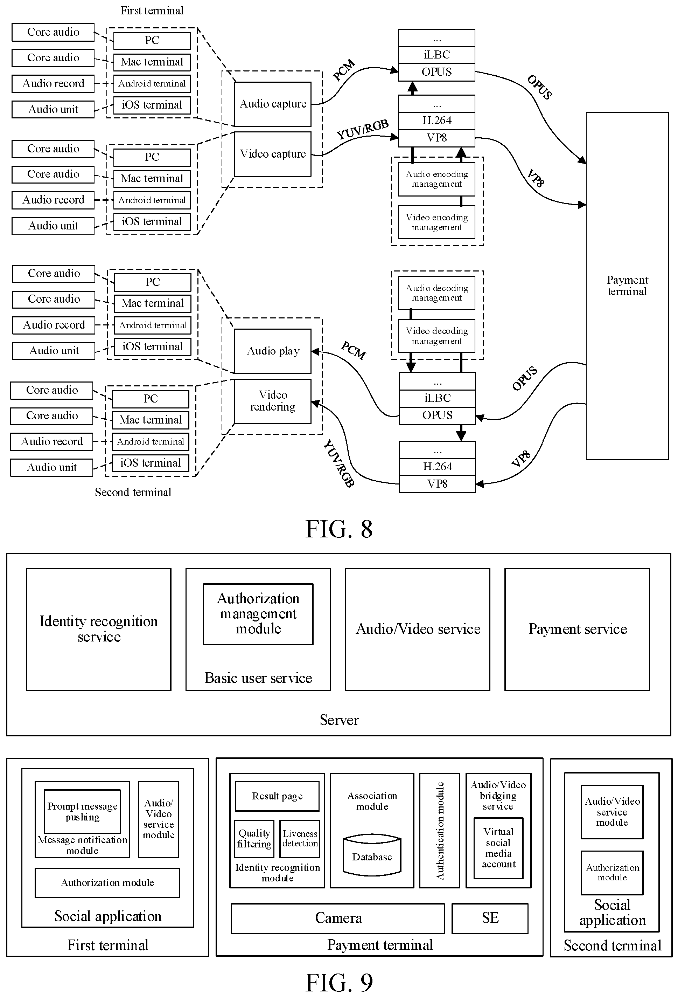

For example, a transmission process of the first call data may be shown in FIG. 8. The audio/video capture module of the first terminal captures audio or a video. For example, captured audio is in a pulse code modulation (PCM) format, and a captured video is in a luminance chrominance chroma (YUV) or red green blue (RGB) format. The captured audio or video is encoded to obtain the first call data. An audio coding format includes iLBC, OPUS, and the like, and a video coding format includes H.264, VP8, and the like. For example, the audio in the PCM format is encoded by using the OPUS coding format to obtain data in an OPUS format, and the video in the YUV or RGB format is encoded by using the VP8 coding format to obtain data in a VP8 format. After the first terminal obtains the first call data, the first terminal transmits the first call data to the payment terminal, and the payment terminal transmits the first call data to the second terminal. The first call data includes the data in the OPUS format and the data in the VP8 format.

After receiving the first call data, the second terminal first decodes the first call data, for example, decodes the audio in the first call data based on the iLBC or OPUS coding format to obtain audio in the PCM format, and decodes the video in the first call data based on the H.264 or VP8 coding format to obtain a video in the YUV or RGB format. For example, the first call data includes the data in the OPUS format and the data in the VP8 format, and the second terminal decodes the data in the OPUS format based on the OPUS coding format to obtain audio in the PCM format, and decodes the data in the VP8 format based on the VP8 coding format to obtain a video in the YUV or RGB format. After decoded audio is obtained, the audio may be played through a speaker. After a decoded video is obtained, the video may be rendered, to display a video image on a screen of the second terminal. The second terminal also has an audio/video capture module for capturing audio and a video.

According to the method for network calling provided in some embodiments, the first object can quickly and conveniently communicate with the second object through an audio/video call, for example, consult the second object about a payment-associated problem. In some embodiments, the payment-associated problem may also be referred to as a customer complaint problem.

Based on the method provided in some embodiments, when the payment terminal is started in a store, the payment terminal establishes a local connection to a terminal of a store cashier (the second object), performs authentication (performs verification on the terminal of the cashier), and supports reception of an audio/video call from the terminal of the first object after the authentication. When the first object generates a related order on the payment terminal, a message is pushed to the terminal. The first object may call the payment terminal, and indirectly make an audio/video call to the terminal of the cashier through the payment terminal to consult about a payment-associated problem, to improve problem handling efficiency. In the store with the payment terminal, an audio/video call between the first object and the second object can be implemented based on payment information of the first object through bridging by the payment terminal. This helps improve efficiency of handling related problems such as an offline order exception.

In some embodiments, the first terminal can establish a first network call with the second terminal through the payment terminal. This enables the user of the first terminal to communicate with a service provider associated with the payment terminal without requiring the first terminal to obtain a social account of the second terminal. Because the payment terminal relays the first network call, the social accounts of the first terminal and the second terminal are not exposed to each other, thereby improving privacy and security of the social accounts. Moreover, since the first network call is routed via the payment terminal, a first network call can be established between the first terminal and the second terminal even when no social relationship exists between their respective social accounts, which increases the success rate of establishing the network call. Moreover, the first terminal can make a first network call with the second terminal through the payment terminal. Based on this, the first terminal may communicate, through the first network call, with the second terminal for providing the payment-associated service, and communication is convenient. This helps improve communication efficiency, and improve interaction experience of the first object, increase frequency of performing offline payment by the first object by using the payment terminal, and improve utilization of the payment terminal. In addition, because the first network call between the first terminal and the second terminal is implemented through transit by the payment terminal, during the first network call between the first terminal and the second terminal, the first terminal does not need to learn of the social account of the second terminal, and the second terminal does not need to learn of the social account of the first terminal either, so that privacy of the social account is high. This helps improve security of the social account. Further, regardless of whether the first terminal can learn of the social account of the second terminal and whether the second terminal can learn of the social account of the first terminal, both the first terminal and the second terminal can implement the network call through transit by the payment terminal, so that a success rate of the network call is high.

In some embodiments, the method for network calling provided in some embodiments may be implemented based on a device architecture shown in FIG. 9. The device architecture includes a server, a first terminal, a payment terminal, and a second terminal. The server can provide an identity recognition service, a basic user service, an audio/video service, and a payment service. The basic user service includes an authorization management service. A social application is installed on the first terminal. The social application has an authorization module, a message notification module, and an audio/video service module. The authorization module is configured to obtain first authorization information, the message notification module is configured to push a prompt message, and the audio/video service module is configured to capture or render audio or a video. A social application is installed on the second terminal. The social application has an authorization module and an audio/video service module. The authorization module is configured to obtain second authorization information, and the audio/video service module is configured to capture or render audio or a video.

The payment terminal has a camera (for example, a 3D camera), an SE, an identity recognition module, an association module for historical payment information and identification information of a payment object, an authentication module, and an audio/video bridging service module. The identity recognition module is configured to recognize an identity of the payment object based on biological recognition data (for example, a palm print, a fingerprint, an iris, or a face) of the payment object. In some embodiments, the identity recognition module may include a quality filtering module, a liveness detection module, and a result display module. The quality filtering module is configured to select biological recognition data that meets a quality requirement. The liveness detection module is configured to capture biological recognition data of liveness. The result display module is configured to display an identity recognition result on a result page. The association module for the historical payment information and the identification information of the payment object may maintain a database for storing the historical payment information and the identification information of the payment object in an associated manner. For example, the database may be SQLite (a lightweight database, which is a relational database management system that conforms to atomicity, consistency, isolation, and durability (ACID)). The authentication module is configured to perform device verification based on the second terminal and perform verification on a first call request. The audio/video bridging service module is configured to bridge, through a virtual social account, a first network call between a first social account logged in to the first terminal and a second social account logged in to the second terminal.

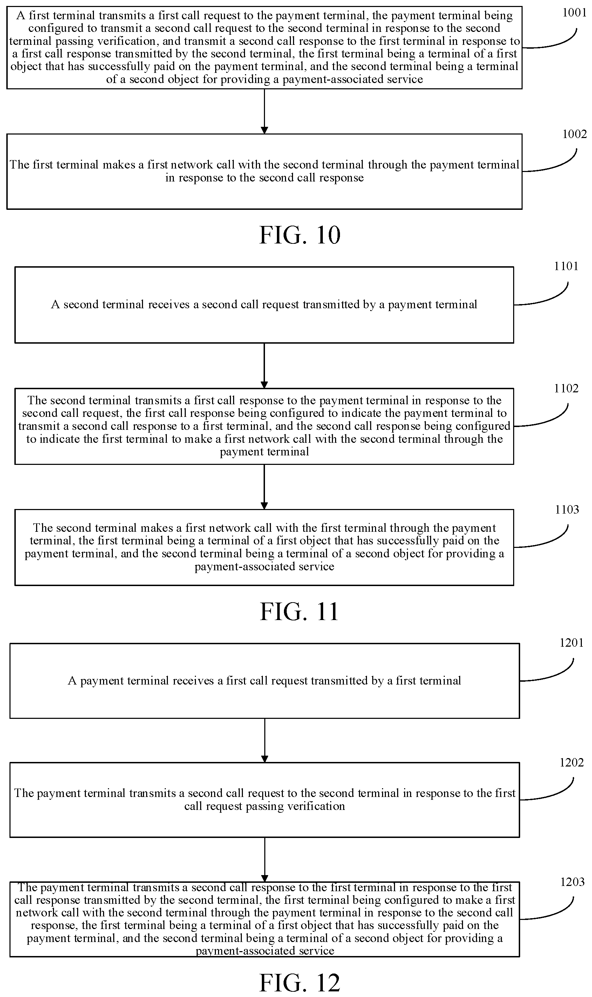

An embodiment of this application provides a method for network calling. The method may be applied to the implementation environment shown in FIG. 1. For example, the method is performed by the first terminal 11. As shown in FIG. 10, the method for network calling provided in this embodiment of this application may include the following operation 1001 and operation 1002.

Operation 1001: The first terminal transmits a first call request to the payment terminal, the payment terminal being configured to transmit a second call request to the second terminal in response to the second terminal passing verification, and transmit a second call response to the first terminal in response to a first call response transmitted by the second terminal, the first terminal being a terminal of a first object that has successfully paid on the payment terminal, and the second terminal being a terminal of a second object for providing a payment-associated service.

In some embodiments, a process of transmitting, by the first terminal, the first call request to the payment terminal includes: The first terminal displays a prompt message, the prompt message being configured for indicating that the payment on the payment terminal is completed; displays a payment details page in response to a first trigger operation on the prompt message, a network call service control being displayed on the payment details page; and transmits the first call request to the payment terminal in response to a second trigger operation on the network call service control.

In some embodiments, before the first terminal transmits the first call request to the payment terminal, the method further includes: The first terminal obtains first authorization information, the first authorization information being configured for authorizing the first terminal to make a second network call with the payment terminal.

Operation 1002: The first terminal makes a first network call with the second terminal through the payment terminal in response to the second call response.

In some embodiments, before the first terminal makes the first network call with the second terminal through the payment terminal, the method further includes: The first terminal displays a call initiation interface, a virtual social account corresponding to the payment terminal being displayed on the call initiation interface, and the virtual social account being configured for identifying the payment terminal.

In some embodiments, that the first terminal makes a first network call with the second terminal through the payment terminal includes at least one of the following: The first terminal obtains first call data, and transmits the first call data to the second terminal through the payment terminal; and the first terminal receives second call data transmitted by the payment terminal, the second call data being obtained by the second terminal and transmitted to the payment terminal. The making the first network call includes at least one of the following: transmitting first call data to the second terminal through the payment terminal; and receiving, through the payment terminal, second call data transmitted by the second terminal.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

For specific implementation processes of operation 1001 and operation 1002, refer to related operations performed by the first terminal in the embodiments shown in FIG. 2 and FIG. 3. Details are not described herein again.

An embodiment of this application provides a method for network calling. The method may be applied to the implementation environment shown in FIG. 1. For example, the method is performed by the second terminal 13. As shown in FIG. 11, the method for network calling provided in some embodiments may include the following operation 1101 to operation 1103.

Operation 1101: The second terminal receives a second call request transmitted by the payment terminal.

In some embodiments, before the second terminal receives the second call request transmitted by the payment terminal, the method further includes: The second terminal obtains second authorization information, the second authorization information being configured for authorizing the second terminal to make a third network call with the payment terminal.

In some embodiments, before the second terminal receives the second call request transmitted by the payment terminal, the method further includes: The second terminal receives a public key of the payment terminal, encrypts first data based on the public key of the payment terminal to obtain second data, and transmits the second data to the payment terminal, the payment terminal being configured to decrypt the second data by using a private key of the payment terminal to obtain third data, and transmit the third data to the second terminal. The second terminal transmits a verification pass response to the payment terminal in response to that the third data is identical to the first data, the payment terminal being configured to: in response to the verification pass response, determine that the second terminal passes verification; and in response to the second terminal passing verification, associate with the second terminal.

In some embodiments, before the second terminal receives the second call request transmitted by the payment terminal, the method further includes: receiving fourth data and the public key of the payment terminal, encrypting the fourth data by using the public key of the payment terminal to obtain fifth data, and transmitting the fifth data to the payment terminal, the payment terminal being configured to: decrypt the fifth data by using the private key of the payment terminal to obtain sixth data; in response to that the sixth data is identical to the fourth data, determine that the second terminal passes verification; and in response to the second terminal passing verification, associate with the second terminal.

Operation 1102: The second terminal transmits a first call response to the payment terminal in response to the second call request, the first call response being configured to indicate the payment terminal to transmit a second call response to a first terminal, and the second call response being configured to indicate the first terminal to make a first network call with the second terminal through the payment terminal.

In some embodiments, a process of transmitting, by the second terminal, the first call response to the payment terminal in response to the second call request includes: displaying a call request interface in response to the second call request, the call request interface comprising a virtual social account of the payment terminal and a call acceptance control, the virtual social account being configured for identifying the payment terminal; and transmitting the first call response to the payment terminal in response to a third trigger operation on the call acceptance control.

Operation 1103: The second terminal makes a first network call with the first terminal through the payment terminal, the first terminal being a terminal of a first object that has successfully paid on the payment terminal, and the second terminal being a terminal of a second object for providing a payment-associated service.

In some embodiments, that the second terminal makes a first network call with the first terminal through the payment terminal includes at least one of the following: The second terminal obtains second call data, and transmits the second call data to the first terminal through the payment terminal; and the second terminal receives first call data transmitted by the payment terminal, the first call data being obtained by the first terminal and transmitted to the payment terminal. In other words, the making the first network call includes at least one of the following:receiving, through the payment terminal, first call data transmitted by the second terminal; transmitting second call data to the second terminal through the payment terminal.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

For specific implementation processes of operation 1101 to operation 1103, refer to related operations performed by the second terminal in the embodiments shown in FIG. 2 and FIG. 3. Details are not described herein again.

An embodiment of this application provides a method for network calling. The method may be applied to the implementation environment shown in FIG. 1. For example, the method is performed by the payment terminal 12. As shown in FIG. 12, the method for network calling provided in some embodiments may include the following operation 1201 to operation 1203.

Operation 1201: The payment terminal receives a first call request transmitted by the first terminal.

Operation 1202: The payment terminal transmits a second call request to the second terminal in response to the first call request passing verification.

In some embodiments, the first call request carries identification information of a first object ( i.e., a first account), and before the payment terminal transmits the second call request to the second terminal in response to the first call request passing verification, the method further includes: in response to historical payment information comprising first payment information associated with the first account and the first payment information satisfying a preset constraint condition, determining that the first call request passes verification, the preset constraint condition being that at least one of the following is satisfied: an interval between a payment time of the first payment information and a current time is not greater than a preset interval; and an order amount in the first payment information is greater than a preset amount.

In some embodiments, before the payment terminal transmits the second call request to the second terminal in response to the first call request passes verification, the method further includes: The payment terminal displays a settings page, a setting control for a call receiver being displayed on the settings page. The payment terminal determines the second terminal based on a fourth trigger operation on the setting control. The payment terminal verifies the second terminal, and associates with the second terminal in response to the second terminal passing verification.

In some embodiments, a process of determining, by the payment terminal, the second terminal in response to the fourth trigger operation on the setting control includes: capturing an account image in response to the fourth trigger operation on the setting control; recognizing the account image to obtain a social account; and determining a terminal to which the social account is logged in as the second terminal; or recognizing the second terminal via near field communication, NFC, in response to the fourth trigger operation on the setting control.

In some embodiments, a process of verifying the second terminal includes: The payment terminal transmits a public key of the payment terminal to the second terminal, the second terminal being configured to encrypt first data based on the public key to obtain second data, and transmit the second data to the payment terminal. The payment terminal decrypts the second data by using a private key of the payment terminal to obtain third data, and transmits the third data to the second terminal, the second terminal being configured to transmit a verification pass response to the payment terminal in response to that the third data is identical to the first data. In response to the verification pass response, the payment terminal determines that the second terminal passes verification.

In some embodiments, a process of verifying the second terminal includes: transmitting fourth data and a public key of the payment terminal to the second terminal, the second terminal being configured to encrypt the fourth data by using the public key of the payment terminal to obtain fifth data, and transmit the fifth data to the payment terminal; decrypting the fifth data by using a private key of the payment terminal to obtain sixth data; and in response to that the sixth data is identical to the fourth data, determining that the second terminal passes verification.

Operation 1203: The payment terminal transmits a second call response to the first terminal in response to the first call response transmitted by the second terminal, the first terminal being configured to make a first network call with the second terminal through the payment terminal in response to the second call response, the first terminal being a terminal of a first object that has successfully paid on the payment terminal, and the second terminal being a terminal of a second object for providing a payment-associated service.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

For specific implementation processes of operation 1201 to operation 1203, refer to related operations performed by the payment terminal in the embodiments shown in FIG. 2 and FIG. 3. Details are not described herein again.

An embodiment of this application provides a system for network calling. The system includes a first terminal, a payment terminal, and a second terminal.

The first terminal is configured to transmit a first call request to the payment terminal. The payment terminal being configured to transmit a second call request to the second terminal in response to determining that the second terminal passes verification. The second terminal is configured to receive the second call request transmitted by the payment terminal, and transmit a first call response to the payment terminal in response to the second call request. The payment terminal is further configured to transmit a second call response to the first terminal in response to the first call response transmitted by the second terminal. The first terminal is further configured to make a first network call with the second terminal through the payment terminal in response to the second call response. The second terminal is further configured to make a first network call with the first terminal through the payment terminal.

The first terminal is a terminal of a first object that has successfully paid on the payment terminal, and the second terminal is a terminal of a second object for providing a payment-associated service.

In some embodiments, the first terminal is configured to: display a prompt message, the prompt message being configured for indicating that the payment on the payment terminal is completed; display a payment details page in response to a first trigger operation on the prompt message, a network call service control being displayed on the payment details page; and transmit the first call request to the payment terminal in response to a second trigger operation on the network call service control.

In some embodiments, the first terminal is further configured to display a call initiation interface, a virtual social account corresponding to the payment terminal being displayed on the call initiation interface, and the virtual social account being configured for identifying the payment terminal.

In some embodiments, the first terminal is further configured to obtain first authorization information, the first authorization information being configured for authorizing the first terminal to make a second network call with the payment terminal.

In some embodiments, the first terminal is configured to perform at least one of the following:
transmitting first call data to the second terminal through the payment terminal; and
receiving, through the payment terminal, second call data transmitted by the second terminal.

In some embodiments, the second terminal is configured to: display a call request interface in response to the second call request, the call request interface comprising a virtual social account of the payment terminal and a call acceptance control, the virtual social account being configured for identifying the payment terminal; and transmit the first call response to the payment terminal in response to a third trigger operation on the call acceptance control.

In some embodiments, the second terminal is configured to perform at least one of the following:
receiving, through the payment terminal, first call data transmitted by the second terminal; and
transmitting second call data to the second terminal through the payment terminal.

In some embodiments, the second terminal is further configured to obtain second authorization information, the second authorization information being configured for authorizing the second terminal to make a second network call with the payment terminal.

In some embodiments, the first call request carries the first account, and the payment terminal is further configured to: in response to historical payment information comprising first payment information associated with the first account and the first payment information satisfying a preset constraint condition, determine that the first call request passes verification, the preset constraint condition being that at least one of the following is satisfied: an interval between a payment time of the first payment information and a current time is not greater than a preset interval; and an order amount in the first payment information is greater than a preset amount.

In some embodiments, the payment terminal is further configured to: display a settings page, the settings page comprising a setting control for determining the second terminal; determine the second terminal in response to a fourth trigger operation on the setting control; and verify the second terminal, and associate with the second terminal in response to that the second terminal passes verification.

In some embodiments, the payment terminal is configured to transmit a public key of the payment terminal to the second terminal;
the second terminal is further configured to receive the public key of the payment terminal, encrypt first data based on the public key of the payment terminal to obtain second data, and transmit the second data to the payment terminal;
the payment terminal is further configured to decrypt the second data by using a private key of the payment terminal to obtain third data, and transmit the third data to the second terminal;
the second terminal is further configured to transmit a verification pass response to the payment terminal in response to that the third data is identical to the first data; and
the payment terminal is further configured to: in response to the verification pass response, determine that the second terminal passes verification.

In some embodiments, the payment terminal is configured to transmit fourth data and a public key of the payment terminal to the second terminal;
the second terminal is further configured to: receive the fourth data and the public key of the payment terminal, encrypt the fourth data by using the public key of the payment terminal to obtain fifth data, and transmit the fifth data to the payment terminal; and
the payment terminal is further configured to decrypt the fifth data by using a private key of the payment terminal to obtain sixth data, and in response to that the sixth data is identical to the fourth data, determine that the second terminal passes verification.

In some embodiments, the payment terminal is configured to: capture an account image in response to the fourth trigger operation on the setting control; recognize the account image to obtain a social account; and determine a terminal to which the social account is logged in as the second terminal; or recognize the second terminal via near field communication, NFC, in response to the fourth trigger operation on the setting control.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

The system provided in the foregoing embodiment and the method embodiments belong to a same concept. For details about a specific implementation process of the system and effects that can be achieved, refer to the method embodiments. Details are not described herein again.

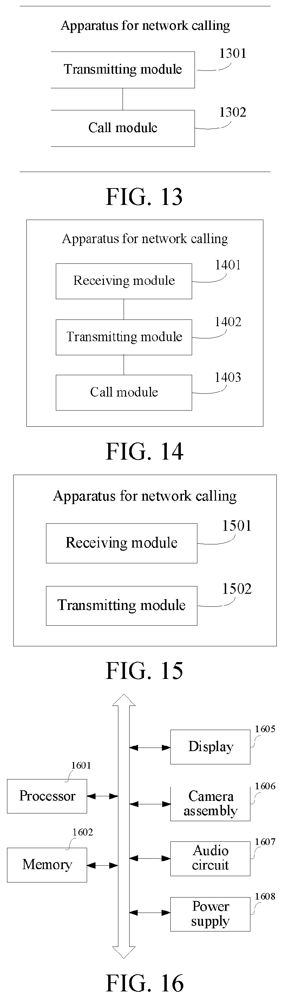

As shown in FIG. 13, an embodiment of this application provides an apparatus for network calling, and the apparatus includes:
a transmitting module 1301, configured to: transmit a first call request to a payment terminal, the first call request being configured to indicate the payment terminal to transmit a second call request to a second terminal in response to the first call request passing verification, the first terminal having a payment on the payment terminal; receive a second call response from the payment terminal, wherein the second call response is transmitted by the payment terminal based on a first call response, and the first call response is transmitted by the second terminal in response to the second call request ; and
a call module 1302, configured to make a first network call with the second terminal through the payment terminal in response to the second call response.

In some embodiments, the transmitting module 1301 is configured to: display a prompt message, the prompt message being configured for indicating that the payment on the payment terminal is completed; display a payment details page in response to a first trigger operation on the prompt message, the payment details page comprising a network call service control; and transmit the first call request to the payment terminal in response to a second trigger operation on the network call service control.

In some embodiments, the apparatus further includes:
a display module, configured to display a call initiation interface, the call initiation interface comprising a virtual social account of the payment terminal, the virtual social account being configured for identifying the payment terminal.

In some embodiments, the apparatus further includes: an obtaining module, configured to obtain first authorization information, the first authorization information being configured for authorizing the first terminal to make a second network call with the payment terminal.

In some embodiments, the call module 1302 is configured to perform at least one of the following:
transmitting first call data to the second terminal through the payment terminal; and
receiving, through the payment terminal, second call data transmitted by the second terminal.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

As shown in FIG. 14, an embodiment of this application provides an apparatus for network calling, and the apparatus includes:
a receiving module 1401, configured to receive a second call request transmitted by a payment terminal;
a transmitting module 1402, configured to transmit a first call response to the payment terminal in response to the second call request, the first call response being configured to indicate the payment terminal to transmit a second call response to a first terminal, and the second call response being configured to indicate the first terminal to make a first network call with the second terminal through the payment terminal; and
a call module 1403, configured to make the first network call with the first terminal through the payment terminal,
the first terminal being a terminal of a first object that has successfully paid on the payment terminal, and the second terminal being a terminal of a second object for providing a payment-associated service.

In some embodiments, the transmitting module 1402 is configured to: display a call request interface in response to the second call request, the call request interface comprising a virtual social account of the payment terminal and a call acceptance control, the virtual social account being configured for identifying the payment terminal; and transmitting the first call response to the payment terminal in response to a third trigger operation on the call acceptance control.

In some embodiments, the call module 1403 is configured to perform at least one of the following:
receiving, through the payment terminal, first call data transmitted by the second terminal; and
transmitting second call data to the second terminal through the payment terminal.

In some embodiments, the apparatus further includes: an obtaining module, configured to obtain second authorization information, the second authorization information being configured for authorizing the second terminal to make a third network call with the payment terminal.

In some embodiments, the receiving module 1401 is further configured to receive a public key of the payment terminal;
the transmitting module 1402 is further configured to encrypt first data based on the public key of the payment terminal to obtain second data, and transmit the second data to the payment terminal, the payment terminal being configured to decrypt the second data by using a private key of the payment terminal to obtain third data, and transmit the third data to the second terminal; and
the transmitting module 1402 is further configured to transmit a verification pass response to the payment terminal in response to that the third data is identical to the first data, the payment terminal being configured to: in response to the verification pass response, determine that the second terminal passes verification; and in response to that the second terminal passes verification, associate with the second terminal.

In some embodiments, the receiving module 1401 is further configured to receive fourth data and the public key of the payment terminal; and
the transmitting module 1402 is further configured to encrypt the fourth data by using the public key of the payment terminal to obtain fifth data, and transmit the fifth data to the payment terminal, the payment terminal being configured to: decrypt the fifth data by using the private key of the payment terminal to obtain sixth data; in response to that the sixth data is identical to the fourth data, determine that the second terminal passes verification; and in response to that the second terminal passes verification, associate with the second terminal.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

As shown in FIG. 15, an embodiment of this application provides an apparatus for network calling, and the apparatus includes:
a receiving module 1501, configured to receive a first call request transmitted by a first terminal; and
a transmitting module 1502, configured to: transmit a second call request to a second terminal in response to the first call request passing verification; and transmit a second call response to the first terminal in response to receiving, from the second terminal, a first call response to the second call request, the second call response being configured to indicate the first terminal to make a first network call with the second terminal through the payment terminal.

In some embodiments, the first call request carries the first account, and the apparatus further includes:
a verification module, configured to: in response to historical payment information comprising first payment information associated with the first account and the first payment information satisfying a preset constraint condition, determine that the first call request passes verification, the preset constraint condition being that at least one of the following is satisfied: an interval between a payment time of the first payment information and a current time is not greater than a preset interval; and an order amount in the first payment information is greater than a preset amount.

In some embodiments, the apparatus further includes:
a display module, configured to display a settings page, the settings page comprising a setting control for determining the second terminal;
a determining module, configured to determine he second terminal in response to a fourth trigger operation on the setting control; and
an association module, configured to verify the second terminal, and associate with the second terminal in response to that the second terminal passes verification.

In some embodiments, the association module is configured to: transmit a public key of the payment terminal to the second terminal, the second terminal being configured to encrypt first data based on the public key to obtain second data, and transmit the second data to the payment terminal; decrypt the second data by using a private key of the payment terminal to obtain third data, and transmit the third data to the second terminal, the second terminal being configured to transmit a verification pass response to the payment terminal in response to that the third data is identical to the first data; and in response to the verification pass response, determine that the second terminal passes verification.

In some embodiments, the association module is configured to: transmit fourth data and a public key of the payment terminal to the second terminal, the second terminal being configured to encrypt the fourth data by using the public key of the payment terminal to obtain fifth data, and transmit the fifth data to the payment terminal; decrypt the fifth data by using a private key of the payment terminal to obtain sixth data; and in response to that the sixth data is identical to the fourth data, determine that the second terminal passes verification.

In some embodiments, the determining module is configured to: capture an account image in response to the fourth trigger operation on the setting control; recognize the account image to obtain a social account; and determine a terminal to which the social account is logged in as the second terminal; or recognize the second terminal via near field communication, NFC, in response to the fourth trigger operation on the setting control.

In some embodiments, the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

When the apparatus provided in the foregoing embodiments implements the functions of the apparatus, division of the foregoing functional modules is only used as an example for description. In practical application, the functions may be allocated to and completed by different functional modules according to requirements. That is, an internal structure of the device is divided into different function modules, to complete all or some of the functions described above. In addition, the apparatus provided in the foregoing embodiment and the method embodiments belong to a same concept. For details about a specific implementation process of the apparatus and effects that can be achieved, refer to the method embodiments. Details are not described herein again.

FIG. 16 is a diagram of a structure of a computer device according to an embodiment of this application. The computer device may be any one of a first terminal, a payment terminal, and a second terminal. For example, the terminal may be a PC, a mobile phone, a smartphone, a PDA, a wearable device, a PPC, a tablet computer, a smart head unit, a smart television, a smart speaker, or an in-vehicle terminal. The terminal may also be referred to as another name such as user equipment, a portable terminal, a laptop terminal, or a desktop terminal.

Usually, the terminal includes a processor 1601 and a memory 1602.

The processor 1601 may include one or more processing cores, for example, a 4-core processor or an 8-core processor. The processor 1601 may be implemented in at least one of the following hardware forms: a digital signal processor (DSP), a field programmable gate array (FPGA), and a programmable logic array (PLA). The processor 1601 may alternatively include a main processor and a coprocessor. The main processor is a processor for processing data in an awake state, and is also referred to as a central processing unit (CPU). The coprocessor is a low power processor for processing data in a standby state. In some embodiments, the processor 1601 may be integrated with a graphics processing unit (GPU). The GPU is configured to render and draw content that needs to be displayed on a display. In some embodiments, the processor 1601 may further include an AI processor. The AI processor is configured to process computing operations related to machine learning.

The memory 1602 may include one or more computer-readable storage media, and the computer-readable storage medium may be non-transient. The memory 1602 may further include a high-speed random access memory (RAM) and a nonvolatile memory, for example, one or more disk storage devices or flash storage devices. In some embodiments, the non-transient computer-readable storage medium in the memory 1602 is configured to store at least one instruction, and the at least one instruction is executed by the processor 1601, to enable the terminal to implement the method for network calling provided in the method embodiments of this application.

In some embodiments, the terminal may further include at least one of a display 1605, a camera assembly 1606, an audio circuit 1607, and a power supply 1608.

The display 1605 is configured to display a user interface (UI). The UI may include a graph, text, an icon, a video, and any combination thereof. When the display 1605 is a touch display, the display 1605 is further capable of capturing a touch signal on or above a surface of the display 1605. The touch signal may be inputted to the processor 1601 as a control signal for processing. In this case, the display 1605 may be further configured to provide a virtual button and/or a virtual keyboard that are/is also referred to as a soft button and/or a soft keyboard. In some embodiments, there may be one display 1605, disposed on a front panel of the terminal. In some other embodiments, there may be at least two displays 1605, respectively disposed on different surfaces of the terminal or in a folded design. In some other embodiments, the display 1605 may be a flexible display disposed on a curved surface or a folded surface of the terminal. Alternatively, the display 1605 may be even arranged in a non-rectangular irregular pattern, that is, a special-shaped screen. The display 1605 may be made of a liquid crystal display (LCD), an organic light-emitting diode (OLED), or other materials.

The camera assembly 1606 is configured to capture images or videos. In some embodiments, the camera assembly 1606 includes a front-facing camera and a rear-facing camera. Usually, the front-facing camera is disposed on the front panel of the terminal, and the rear-facing camera is disposed on a rear side of the terminal. In some embodiments, there are at least two rear-facing cameras, each of which is any one of a main camera, a depth-of-field camera, a wide-angle camera, and a telephoto camera, to implement a background blur function through fusion of the main camera and the depth-of-field camera, and implement a panoramic photographing function and a VR photographing function or other fusion photographing functions through fusion of the main camera and the wide-angle camera. In some embodiments, the camera assembly 1606 may further include a flash. The flash may be a mono color temperature flash or a double color temperature flash. The double color temperature flash is a combination of a warm light flash and a cold light flash, and may be used for light compensation under different color temperatures.

The audio circuit 1607 may include a microphone and a speaker. The microphone is configured to capture sound waves of a user and an environment, and convert the sound waves into an electrical signal for input to the processor 1601 for processing, or input to a radio frequency (RF) circuit 1604 for implementing voice communication. To capture stereo or reduce noise, there may be a plurality of microphones respectively disposed at different parts of the terminal. The microphone may alternatively be an array microphone or an omni-directional capture microphone. The speaker is configured to convert an electrical signal from the processor 1601 or the RF circuit 1604 into a sound wave. The speaker may be a conventional film speaker or a piezoelectric ceramic speaker. When the speaker is a piezoelectric ceramic speaker, the speaker not only can convert an electrical signal into a sound wave audible to a human being, but also can convert an electrical signal into a sound wave inaudible to a human being, for ranging and other purposes. In some embodiments, the audio circuit 1607 may further include a headset jack.

The power supply 1608 is configured to supply power to components in the terminal. The power supply 1608 may be an alternating current power supply, a direct current power supply, a disposable battery, or a rechargeable battery. When the power supply 1608 includes the rechargeable battery, the rechargeable battery may support wired charging or wireless charging. The rechargeable battery may be further configured to support a fast charging technology.

A person skilled in the art may understand that the structure shown in FIG. 16 constitutes no limitation on the terminal, and the terminal may include more or fewer components than those shown in the figure, or some components may be combined, or different component layouts may be used.

In some embodiments, a computer device is further provided. The computer device includes a processor and a memory, and the memory has at least one computer program stored therein. The at least one computer program is loaded and executed by one or more processors, to enable the computer device to implement any one of the foregoing method for network calling.

In some embodiments, a nonvolatile computer-readable storage medium is further provided. The nonvolatile computer-readable storage medium has at least one computer program stored therein. The at least one computer program is loaded and executed by a processor of a computer device, to enable the computer to implement any one of the foregoing method for network calling.

In some embodiments, the nonvolatile computer-readable storage medium may be a read-only memory (ROM), a RAM, a compact disc read-only memory (CD-ROM), a magnetic tape, a floppy disk, an optical data storage device, or the like.

In some embodiments, a computer program or a computer program product is further provided. The computer program or the computer program product has at least one computer instruction stored therein. The at least one computer instruction is loaded and executed by a processor, to enable a computer to implement any one of the foregoing method for network calling.

Information (including but not limited to user equipment information, user personal information, and the like), data (including but not limited to data for analysis, stored data, displayed data, and the like), and signals in this application are all authorized by users or fully authorized by all parties, and collection, use, and processing of related data need to comply with related laws, regulations, and standards of related countries and regions. For example, a call request, a call response, and a trigger operation in this application are all obtained with full authorization.

The terms "first", ''second'', and the like in this application are intended to distinguish between similar objects but do not necessarily indicate a specific order or sequence. Data used in this way is interchangeable in appropriate circumstances, so that the embodiments of this application described herein can be implemented in an order other than those illustrated or described herein. The implementations described in the foregoing exemplary embodiments do not represent all implementations consistent with this application. Instead, the implementations are merely examples of apparatuses and methods that are consistent with some aspects of this application.

"A plurality of" mentioned in this specification means two or more. "And/or" describes an association relationship between associated objects, and indicates that three relationships may exist. For example, A and/or B may indicate the following three cases: Only A exists, both A and B exist, and only B exists. The character "/" usually indicates an "or" relationship between the associated objects.

A person of ordinary skill in the art can understand that all or some of the operations of the foregoing embodiments can be implemented by hardware, or can be implemented by a program instructing related hardware. In some embodiments, the program may be stored in a computer-readable storage medium. In some embodiments, the storage medium may be a ROM, a magnetic disk, an optical disc, or the like.

The foregoing descriptions are merely exemplary embodiments of this application, but are not intended to limit this application. Any modification, equivalent replacement, or improvement made within the principle of this application shall fall within the protection scope of this application.

## Claims

1. A method for network calling, executable by a first terminal, and the method comprising:
transmitting a first call request to a payment terminal, the first call request being configured to indicate the payment terminal to transmit a second call request to a second terminal in response to the first call request passing verification, the first terminal having a payment on the payment terminal;
receiving a second call response from the payment terminal, wherein the second call response is transmitted by the payment terminal based on a first call response, and the first call response is transmitted by the second terminal in response to the second call request; and
making a first network call with the second terminal through the payment terminal in response to the second call response.

2. The method according to claim 1, wherein the transmitting a first call request to a payment terminal comprises:
displaying a prompt message, the prompt message being configured for indicating that the payment on the payment terminal is completed;
displaying a payment details page in response to a first trigger operation on the prompt message, the payment details page comprising a network call service control; and
transmitting the first call request to the payment terminal in response to a second trigger operation on the network call service control.

3. The method according to claim 1 or 2, wherein the method further comprises:
displaying a call initiation interface, the call initiation interface comprising a virtual social account of the payment terminal, the virtual social account being configured for identifying the payment terminal.

4. The method according to any one of claims 1 to 3, wherein the method further comprises:
obtaining first authorization information, the first authorization information being configured for authorizing the first terminal to make a second network call with the payment terminal.

5. The method according to any one of claims 1 to 4, wherein the making a first network call with the second terminal through the payment terminal comprises at least one of the following:
transmitting first call data to the second terminal through the payment terminal; and
receiving, through the payment terminal, second call data transmitted by the second terminal.

6. The method according to any one of claims 1 to 5, wherein the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

7. A method for network calling, executable by a second terminal, and the method comprising:
receiving a second call request transmitted by a payment terminal;
transmitting a first call response to the payment terminal in response to the second call request, the first call response being configured to indicate the payment terminal to transmit a second call response to a first terminal, and the second call response being configured to indicate the first terminal to make a first network call with the second terminal through the payment terminal; and
making the first network call with the first terminal through the payment terminal.

8. The method according to claim 7, wherein the transmitting a first call response to the payment terminal in response to the second call request comprises:
displaying a call request interface in response to the second call request, the call request interface comprising a virtual social account of the payment terminal and a call acceptance control, the virtual social account being configured for identifying the payment terminal; and
transmitting the first call response to the payment terminal in response to a third trigger operation on the call acceptance control.

9. The method according to claim 7 or 8, wherein the making the first network call with the first terminal through the payment terminal comprises at least one of the following:
receiving, through the payment terminal, first call data transmitted by the first terminal;
transmitting second call data to the first terminal through the payment terminal.

10. The method according to any one of claims 7 to 9, wherein the method further comprises:
obtaining second authorization information, the second authorization information being configured for authorizing the second terminal to make a third network call with the payment terminal.

11. The method according to any one of claims 7 to 10, wherein the method further comprises:
receiving a public key of the payment terminal;
encrypting first data based on the public key of the payment terminal to obtain second data;
transmitting the second data to the payment terminal, the second data being configured to indicate the payment terminal to decrypt the second data by using a private key of the payment terminal to obtain third data; and
receiving the third data from the payment terminal;
transmitting a verification pass response to the payment terminal in response to that the third data is identical to the first data, the verification pass response indicating that the second terminal passes verification.

12. The method according to any one of claims 7 to 11, wherein the method further comprises:
receiving fourth data and the public key of the payment terminal;
encrypting the fourth data by using the public key of the payment terminal to obtain fifth data;
transmitting the fifth data to the payment terminal, the fifth data being configured to: indicate the payment terminal to decrypt the fifth data by using the private key of the payment terminal to obtain sixth data, and determine that the second terminal passes verification in response to that the sixth data is identical to the fourth data.

13. The method according to any one of claims 7 to 12, wherein the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

14. A method for network calling, executable by a payment terminal, and the method comprising:
receiving a first call request transmitted by a first terminal;
transmitting a second call request to a second terminal in response to the first call request passing verification; and
transmitting a second call response to the first terminal in response to receiving, from the second terminal, a first call response to the second call request, the second call response being configured to indicate the first terminal to make a first network call with the second terminal through the payment terminal.

15. The method according to claim 14, wherein the first call request carries a first account, and the method further comprises:
in response to historical payment information comprising first payment information associated with the first account and the first payment information satisfying a preset constraint condition, determining that the first call request passes verification, the preset constraint condition being that at least one of the following is satisfied: an interval between a payment time of the first payment information and a current time is not greater than a preset interval; and an order amount in the first payment information is greater than a preset amount.

16. The method according to claim 14 or 15, wherein the method further comprises:
displaying a settings page, the settings page comprising a setting control for determining the second terminal;
determining the second terminal in response to a fourth trigger operation on the setting control; and
verifying the second terminal.

17. The method according to claim 16, wherein the verifying the second terminal comprises:
transmitting a public key of the payment terminal to the second terminal, the public key of the payment terminal being configured to indicate the second terminal to encrypt first data based on the public key to obtain second data;
receiving the second data from the second terminal;
decrypting the second data by using a private key of the payment terminal to obtain third data;
transmitting the third data to the second terminal, the third data being configured to indicate the second terminal to transmit a verification pass response to the payment terminal in response to that the third data is identical to the first data; and
in response to the verification pass response, determining that the second terminal passes verification.

18. The method according to claim 16, wherein the verifying the second terminal comprises:
transmitting fourth data and a public key of the payment terminal to the second terminal, the public key of the payment terminal being configured to indicate the second terminal to encrypt the fourth data by using the public key of the payment terminal to obtain fifth data;
receiving the fifth data from the second terminal;
decrypting the fifth data by using a private key of the payment terminal to obtain sixth data; and
in response to that the sixth data is identical to the fourth data, determining that the second terminal passes verification.

19. The method according to any one of claims 16 to 18, wherein the determining the second terminal in response to a fourth trigger operation on the setting control comprises:
capturing an account image in response to the fourth trigger operation on the setting control; recognizing the account image to obtain a social account; and determining a terminal to which the social account is logged in as the second terminal; or
recognizing the second terminal via near field communication (NFC) in response to the fourth trigger operation on the setting control.

20. The method according to any one of claims 14 to 19, wherein the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

21. A system for network calling, the system comprising a first terminal, a payment terminal, and a second terminal,
the first terminal being configured to transmit a first call request to the payment terminal;
the payment terminal being configured to transmit a second call request to the second terminal in response to determining that the second terminal passes verification;
the second terminal being configured to receive the second call request transmitted by the payment terminal, and transmit a first call response to the payment terminal in response to the second call request;
the payment terminal being further configured to transmit a second call response to the first terminal in response to the first call response;
the first terminal being further configured to make a first network call with the second terminal through the payment terminal in response to the second call response;
the first terminal having a payment on the payment terminal.

22. The system according to claim 21, wherein the first terminal is configured to: display a prompt message, the prompt message being configured for indicating that the payment on the payment terminal is completed; display a payment details page in response to a first trigger operation on the prompt message, the payment details page comprising a network call service control; and transmit the first call request to the payment terminal in response to a second trigger operation on the network call service control.

23. The system according to claim 21 or 22, wherein the first terminal is further configured to display a call initiation interface, a virtual social account of the payment terminal being displayed on the call initiation interface, and the virtual social account being configured for identifying the payment terminal.

24. The system according to any one of claims 21 to 23, wherein the first terminal is further configured to obtain first authorization information, the first authorization information being configured for authorizing the first terminal to make a network call with the payment terminal.

25. The system according to any one of claims 21 to 24, wherein the first terminal is configured to perform at least one of the following:
transmitting first call data to the second terminal through the payment terminal; and
receiving, through the payment terminal, second call data transmitted by the second terminal.

26. The system according to any one of claims 21 to 25, wherein the second terminal is configured to: display a call request interface according to the second call request, a virtual social account corresponding to the payment terminal and a call acceptance control being displayed on the call request interface, and the virtual social account being configured for identifying the payment terminal; and transmit the first call response to the payment terminal in response to a trigger operation on the call acceptance control.

27. The system according to any one of claims 21 to 26, wherein the second terminal is configured to perform at least one of the following:
obtaining second call data, and transmitting the second call data to the first terminal through the payment terminal; and
receiving first call data transmitted by the payment terminal, the first call data being obtained by the first terminal and transmitted to the payment terminal.

28. The system according to any one of claims 21 to 27, wherein the second terminal is further configured to obtain second authorization information, the second authorization information being configured for authorizing the second terminal to make a network call with the payment terminal.

29. The system according to any one of claims 21 to 28, wherein the first call request carries the first account, and the payment terminal is further configured to: in response to that historical payment information comprises target payment information associated with the first account and the target payment information meets a constraint condition, determine that verification on the first call request succeeds.

30. The system according to any one of claims 21 to 29, wherein the payment terminal is further configured to: display a settings page, a setting control for a call receiver being displayed on the settings page; determine the second terminal based on a trigger operation on the setting control; and perform device verification based on the second terminal, and associate with the second terminal in response to that the second terminal passes verification.

31. The system according to claim 30, wherein the payment terminal is configured to transmit a public key of the payment terminal to the second terminal;
the second terminal is further configured to receive the public key of the payment terminal, encrypt first data based on the public key of the payment terminal to obtain second data, and transmit the second data to the payment terminal;
the payment terminal is further configured to decrypt the second data by using a private key of the payment terminal to obtain third data, and transmit the third data to the second terminal;
the second terminal is further configured to transmit a verification pass response to the payment terminal in response to that the third data is identical to the first data; and
the payment terminal is further configured to: in response to the verification pass response, determine that the second terminal passes verification.

32. The system according to claim 30, wherein the payment terminal is configured to transmit fourth data and a public key of the payment terminal to the second terminal;
the second terminal is further configured to receive the fourth data and the public key of the payment terminal, encrypt the fourth data by using the public key of the payment terminal to obtain fifth data, and transmit the fifth data to the payment terminal; and
the payment terminal is further configured to decrypt the fifth data by using a private key of the payment terminal to obtain sixth data, and in response to that the sixth data is identical to the fourth data, determine that the second terminal passes verification.

33. The system according to any one of claims 30 to 32, wherein the payment terminal is configured to: capture an account image based on the trigger operation on the setting control, recognize the account image to obtain a social account, and use a terminal to which the social account is logged in as the second terminal; or perform device recognition by using an NFC function based on the trigger operation on the setting control, and use a recognized terminal to which a social account is logged in as the second terminal.

34. The system according to any one of claims 21 to 33, wherein the payment terminal supports at least one of palm print recognition-based payment, facial recognition-based payment, fingerprint recognition-based payment, iris recognition-based payment, gait recognition-based payment, retina recognition-based payment, vein recognition-based payment, or payment code recognition-based payment.

35. An apparatus for network calling, the apparatus comprising:
a transmitting module, configured to: transmit a first call request to a payment terminal, the payment terminal being configured to transmit a second call request to a second terminal in response to that verification on the first call request succeeds, and transmit a second call response to a first terminal based on a first call response transmitted by the second terminal, the first terminal being a terminal of a first object that has successfully paid on the payment terminal, and the second terminal being a terminal of a second object for providing a payment-associated service; and
a call module, configured to make a network call with the second terminal through the payment terminal in response to the second call response.

36. An apparatus for network calling, the apparatus comprising:
a receiving module, configured to receive a second call request transmitted by a payment terminal;
a transmitting module, configured to transmit a first call response to the payment terminal according to the second call request, the payment terminal being configured to transmit a second call response to the first terminal based on the first call response, and the first terminal being configured to make a network call with a second terminal through the payment terminal in response to the second call response; and
a call module, configured to make a network call with the first terminal through the payment terminal,
the first terminal being a terminal of a first object that has successfully paid on the payment terminal, and the second terminal being a terminal of a second object for providing a payment-associated service.

37. An apparatus for network calling, the apparatus comprising:
a receiving module, configured to receive a first call request transmitted by a first terminal; and
a transmitting module, configured to: transmit a second call request to a second terminal in response to that verification on the first call request succeeds; and transmit a second call response to the first terminal based on the first call response transmitted by the second terminal, the first terminal being configured to make a network call with the second terminal through a payment terminal in response to the second call response, the first terminal being a terminal of a first object that has successfully paid on the payment terminal, and the second terminal being a terminal of a second object for providing a payment-associated service.

38. A computer device, the computer device comprising a processor and a memory, the memory storing at least one computer program, and the at least one computer program being loaded and executed by the processor, to enable the computer device to implement the method for network calling according to any one of claims 1 to 20.

39. A nonvolatile computer-readable storage medium, the nonvolatile computer-readable storage medium having at least one computer program stored therein, and the at least one computer program being loaded and executed by a processor, to enable a computer to implement the method for network calling according to any one of claims 1 to 20.

40. A computer program product, the computer program product comprising computer instructions, and the computer instructions being loaded and executed by a processor, to enable a computer to implement the network call method according to any one of claims 1 to 20.
